# EUROPÄISCHE PATENTSCHRIFT

(11) **EP 2 997 170 B1**
(45) Veröffentlichungstag und Bekanntmachung des Hinweises auf die Patenterteilung: **10.10.2018**
(21) Anmeldenummer: 14723031.2
(22) Anmeldetag: 01.05.2014
(51) Int. Cl.: C22B 9/16, C22B 9/22

(54) **VERFAHREN UND VORRICHTUNG ZUM UMSCHMELZEN UND/ODER UMSCHMELZLEGIEREN METALLISCHER WERKSTOFFE, INSBESONDERE VON NITINOL**
METHOD AND DEVICE FOR REMELTING AND/OR REMELT-ALLOYING METALLIC MATERIALS, IN PARTICULAR NITINOL
PROCÉDÉ ET DISPOSITIF DE REFUSION ET/OU D'ALLIAGE DE REFUSION DE MATIÈRES MÉTALLIQUES, NOTAMMENT DE NITINOL

(30) Priorität: 17.05.2013 DE 102013008396
(43) Veröffentlichungstag der Anmeldung: 23.03.2016
(73) Patentinhaber: G. Rau GmbH & Co. KG, 75172 Pforzheim (DE)
(72) Erfinder: SEDLMAYR, Gerhard, 75331 Engelsbrand (DE)
(74) Vertreter: Jany, Peter
(86) Internationale Anmeldenummer: PCT/EP2014/058938
(87) Internationale Veröffentlichungsnummer: WO 2014/184007

(56) Entgegenhaltungen:
- WO-A1-2010/129862
- DE-A1- 2 209 148
- FR-A1- 2 599 640
- US-A- 3 838 288
- US-A1- 2012 097 653
- LIANG SHUHUA ET AL: "Structure and properties of CuCr50 prepared by laser fast remelt", JIGUANG JISHU - LASER TECHNOLOGY, JIGUANGJISHU BIANWEIHUI, CN, Bd. 24, 1. Januar 2000 (2000-01-01), Seiten 388-391, XP009179687, ISSN: 1001-3806
- VAMSI KRISHNA B ET AL: "Laser Processing of Net-Shape NiTi Shape Memory Alloy", METALLURGICAL AND MATERIALS TRANSACTIONS A, SPRINGER-VERLAG, NEW YORK, Bd. 38, Nr. 5, 21. April 2007 (2007-04-21) , Seiten 1096-1103, XP019695801, ISSN: 1543-1940
- Z. SUN, I. ANNERGREN, D. PAN, T.A. MAI: "Effect of laser surface remelting on the corrosion behavior of commercially pure titanium sheet", MATERIALS SCIENCE AND ENGINEERING, Bd. A345, 2003, Seiten 293-300, XP002729141,
- YONG LIU: "Mechanical and thermomechanical properties of a Ti50Ni25Cu25 melt spun ribbon", MATERIALS SCIENCE AND ENGINEERING, vol. A354, 2003, pages 286-291,
- H.J. Klein ET AL: "Effective Electroslag Remelting of Superalloys", Superalloys 1972 (Second International Symposium); Champion, Pa., USA; 1972.09.18-20, 1 January 1972 (1972-01-01), pages B-1, XP055401823, US DOI: 10.7449/1972/Superalloys_1972_B-1_B-26

## Beschreibung

Die Erfindung betrifft ein Verfahren und eine Vorrichtung zum Herstellen metallischer Halbzeuge durch Umschmelzen und/oder Umschmelzlegieren metallischer Werkstoffe, wobei die Erstarrung der Schmelze, d.h. die Wiedererstarrung/Abschreckung des geschmolzenen Materials, mittels einer Kühleinrichtung mit einer hohen Abkühlrate erfolgt (sogenanntes Quenchen). Die hierbei bearbeiteten Werkstoffe sind vorzugsweise platten-, band-, stab-, rundstab-, draht-, bolzen- oder rohrförmige Ausgangshalbzeuge. Insbesondere richtet sich die Erfindung auf die Herstellung bzw. Bearbeitung von Werkstoffen bzw. Halbzeugen aus Nitinol (NiTi). Daher wird die Erfindung im Folgenden im Wesentlichen anhand von Nitinol erläutert, bei dem die Erfindung bevorzugt, aber nicht ausschließlich angewendet werden kann.

Aus der DE 1121281 A ist eine Schmelzanlage zum Lichtbogenschmelzen und Elektronenschmelzen von Metallen unter reduziertem Druck bekannt, bei dem das Metall entgast wird. Das geschmolzene Metall tropft in einen gekühlten Tiegel und bildet dort einen flüssig gehaltenen Schmelzsee.

Verfahren und Vorrichtungen zum lokalen Laser- oder ElektronenstrahlUmschmelzen von Werkstoffen sind aus folgenden Dokumenten bekannt: Liang Shuhua et al, "Structure and properties of CuCr50 prepared by laser fast remelt", Laser Technology 24 (2000) 388-391, US 2012/0097653 A1, DE 2 209 148 A, FR 2 599 640 A1, US 3,838,288, B. Vamsi Krishna et al, "Laser processing of Net-Shape NiTi Shape Memory Alloy", Metallurgical and Material Transactions A 38A (2007) 1096-1103 und Z. Sun et al, "Effect of laser surface remelting on the corrosion behavior of commercially pure titanium sheet", Materials Science and Engineering A345 (2003) 293-300.

Es ist bekannt, dass sich beim Erstarren eines Metalls in Abhängigkeit von den verwendeten Elementen und deren Verhältnis verschiedene Phasen bilden können, siehe z.B. Gerhard Welsch, Rodney Boyer, E. W. Collings, Materials Properties Handbook: Titanium Alloys, ASM International 1993 und Gerd Lütjering, James C. Williams, Titanium, Springer 2003/2007 sowie Jan Frenzel, Werkstoffkundliche Untersuchungen zur schmelzmetallurgischen Herstellung von Ni-reichen NiTi-Formgedächtnislegierungen, Dissertation Ruhr-Universität Bochum 2005, Shaker-Verlag 2006. Ferner kann auch die Anwesenheit von Verunreinigungen wie Sauerstoff und Kohlenstoff beim Schmelzprozess Inklusionen in der gebildeten Legierung erzeugen, siehe die genannten Literaturstellen. Mit Inklusionen werden in der Metallkunde allgemein nichtmetallische, herstellungs- oder entstehungsbedingte Material-Einschlüsse in Metallen bezeichnet.

Die Phasen und Inklusionen haben häufig Einfluss auf die Materialeigenschaften, beispielsweise die Festigkeit, die Formbarkeit und das Ermüdungsverhalten. Daher kann die kontrollierte Bildung von Phasen und Inklusionen während des Schmelzprozesses genutzt werden, um vorhersehbare und gewünschte Materialeigenschaften zu erzielen. Zum Einfluss von Inklusionen auf das Ermüdungsverhalten von Stählen allgemein siehe z.B. P. Grad, B. Reuscher, A. Brodyanski, M. Kopnarski and E. Kerscher, Analysis of the Crack Initiation at Non-Metallic Inclusions in High-Strength Steels, Practical Metallography 49 (2012) 468-469.

Es ist bekannt, Metalle oder Metalllegierungssysteme aus der Schmelze mit Hilfe unterschiedlicher Verfahren schnell abzuschrecken, um dem Material im festen Aggregatzustand Eigenschaften zu verleihen, die es nach langsamen Gieß- und Erstarrungsvorgängen nicht besitzt, siehe z.B. folgende Literaturstellen: Pol Duwez, zitiert in US 4,400,208 A; Pol Duwez, R. H. Willens and W. Klement Jr., Continuous Series of Metastable Solid Solutions, Journal of Applied Physics 31 (1960) 1136; US 2003/056863 A1; US 2009/139612 A1; US 2009/260723 A1; EP 0 024 506 A1; US 4,537,239; US 5,564,490; US 5,842,511; US 5,365,664; US 2004/0043246 A1. So ist es möglich, durch schnelle Erstarrung Metalllegierungen in den amorphen Zustand zu überführen oder Elemente in fester Lösung zu halten (Legierungsübersättigung), die sich bei langsamerer Erstarrung bereits entmischen würden. Weiterhin kann eine schnelle Abkühlung bewirken, dass Legierungen mikrokristallin erstarren und Entmischungen nicht als grobe Phasen ausgeschieden werden.

Durch rasche Abkühlung aus der Schmelze kann die Bildung derartiger Gleichgewichtsphasen weitgehend unterdrückt werden. Aufgrund der begrenzten thermischen Leitfähigkeit vieler Werkstoffe liegen jedoch geometrie- bzw. volumenbedingt begrenzte Abkühlraten vor, wodurch das Entstehen von Fremdphasen meist nicht in dem gewünschten Ausmaß unterdrückt werden kann.

Eine schnelle Erstarrung wird dadurch erreicht, dass der Wärmeinhalt einer Schmelze in einer möglichst kurzen Zeit an ein mit der Schmelze in Kontakt stehendes Kühlmedium durch Wärmeleitung abgegeben wird. Dabei hängt die Abschreckrate in entscheidendem Maße von der Größe der Kontaktfläche der Schmelze zum Kühlmedium im Verhältnis der Menge der Schmelze und dem Material des Kühlmediums ab. Je größer die Kontaktfläche in Relation zur Menge der Schmelze ist umso höher ist die Abschreckrate.

Zum Abschrecken von Metallschmelzen ist im Stand der Technik das Melt-Spinning bekannt, siehe z.B. US 2013/0014860 A1, US 2012/0281510 A1, US 2007/0251665 A1 und WO 2000/47351 A1. Dabei wird ein dünner Strahl der Legierungsschmelze auf ein rotierendes, als Kühleinrichtung dienendes Kupferrad, gespritzt. Hierbei entstehen dünne, schmale Bänder. Nach einem anderen bekannten Verfahren erfolgt ein Verdüsen einer Metallschmelze in ein Kühlmedium, sodass dieses als feines Pulver vorliegt.

Den bekannten Verfahren ist gemeinsam, dass zum Erzeugen eines Kompaktwerkstoffes eine weitere Konsolidierung, d.h. ein Verbinden von Stoffen, folgen muss. Beispielsweise ist es durch Sprühkompaktieren möglich, einen Körper mit mehr Volumen aufzubauen. Gleichfalls ist es möglich, durch selektives Pulverschmelzen (Rapid Prototyping) massive Körper aufzubauen. Die bekannten Verfahren sind jedoch in der Regel mit einer Gasaufnahme bzw. einer unerwünschten Restporosität verbunden.

Bei Nitinol (NiTi) ist es bekannt, zur Formgebung oder Beeinflussung der Umwandlungstemperatur bzw. der elastischen Eigenschaften eine Wärmebehandlung mit einem anschließenden Abschreckprozess, d.h. ein schnelles Abkühlen durchzuführen. Das Abschrecken erfolgt dabei nicht aus der Schmelze, sondern an einem festen Körper, d.h. es handelt sich um Festphasen- und nicht um Flüssigphasenprozesse. Beispiele hierfür sind WO 2013/119912 A1, US 2005/0082773 A1, US 2005/0096733 A1, US 2004/0059410 A1, US 6,422,010 B1, US 6,375,458 B1, JP 61106740 A, JP 61041752 A, JP 60169551 A, JP 60103166 A, JP 59150069 A und US 3,953,253.

Ferner ist es bei Nitinol bekannt, aus einem in einem Schmelztiegel vorliegenden, vollständig aufgeschmolzenen Ausgangsmaterial durch ein schnelles Abkühlen sehr dünne Filamente oder sehr dünnes Bandmaterial herzustellen. Hierzu wird die flüssige Metallschmelze auf ein gekühltes Kupferrad aufgebracht oder zwischen zwei gekühlten Walzen hindurchgeführt. Dabei tritt eine rasche Abkühlung auf, die als Quenchen bezeichnet wird, und das Material erstarrt. Derartige Verfahren sind beispielsweise in JP 8337854 A, JP 5118272 A und JP 59104459 A beschrieben. Bei Nitinol (NiTi) ist es bisher nicht bekannt, durch eine schnelle Abkühlung der Schmelze die metallurgischen und mechanischen Eigenschaften des Materials in Form eines massiven Halbzeugs gezielt zu beeinflussen, insbesondere das Entstehen und die Größe, den Anteil und die Verteilung von Fremdphasen in dem massiven Halbzeug. Auch ist es bisher nicht bekannt, Nitinolhalbzeuge bei der Herstellung schnell aus Schmelze aktiv abzukühlen.

Nitinol wird nach dem Stand der Technik durch verschiedene Vakuumschmelzverfahren hergestellt, nämlich VIM (Vacuum-Induction-Melting, Vakuuminduktionsschmelzen) und VAR (Vacuum-Arc-Remelting, Vakuumlichtbogenumschmelzen). Bei dem beispielsweise aus der Herstellung hochschmelzender Refraktärmetalle wie Tantal und Niob bekannten konventionellen EBR (Electron-Beam-Remelting, Elektronenstrahlumschmelzen) erstarrt die Schmelze in wassergekühlten Kupfertiegeln, wobei das vergleichsweise große Schmelzvolumen eine rasche Erstarrung verhindert.

Aus der Literaturstelle Mohammad H. Elahinia, Mahdi Hashemi, Majid Tabesh, Sarit B. Bhaduri, Manufacturing and processing of NiTi implants: A review, Progress in Materials Science 57 (2012) 911-946 ist es bekannt, das EBM (Electron-Beam-Melting) zum Herstellen von Nitinol zu verwenden. Dabei wird ein stabförmiger Körper aus den Ausgangsmetallen Ni und Ti mittels eines Elektronenstrahls hoher Leistung mit einem großen Abschmelzvolumen geschmolzen, wobei der Körper gleichzeitig über seinen gesamten Querschnitt aufgeschmolzen wird. Das aufgeschmolzene Material tropft in eine gekühlte Kupferkokille und erstarrt dort volumenbedingt mit einer relativ geringen Abkühlgeschwindigkeit, damit die hinzukommende Schmelzmasse nicht auf festes, sondern auf flüssiges Material trifft und sich so zu einem homogenen Körper verbinden kann. Das EBR mit fokussierter Strahlung wurde bisher noch nicht zum Herstellen von Nitinol verwendet.

Beim Herstellen von Nitinol entsteht in dem Erstarrungsprozess neben der gewünschten intermetallischen Primärphase NiTi eine Vielzahl unerwünschter Fremdphasen und sekundärer Phasen in Form binärer, ternärer und quaternärer Phasen mit unterschiedlicher Größe und Verteilung. Darunter befinden sich beispielsweise Carbide wie TiC und die intermetallischen Phasen Ti₂Ni, Ti₂NiOₓ, Ti₄Ni₂O und Ti₄Ni₃. Diese werden allgemein als Inklusionen bezeichnet, weil man annimmt, dass sie sehr großen Einfluss auf die Materialeigenschaften haben. Die Ausbildung dieser Phasen ist konstitutionsbedingt nahezu unvermeidbar und wird insbesondere durch Sauerstoff und Kohlenstoffverunreinigungen, die über die Ausgangsstoffe (Ti und Ni) eingeschleppt werden bzw. aus der Prozessumgebung (Tiegelmaterial oder ggf. umgebende Atmosphäre) stammen, begünstigt. Insbesondere Sauerstoff- und Kohlenstoffverunreinigungen führen zu den Phasen Ti₂NiOₓ und TiC. Diese werden in dem Standard ASTM F2063-5 als Inklusionen bezeichnet.

Neuere Untersuchungen bestätigen die Annahme, dass die Anzahl, die Größe und die Form solcher Phasen/Inklusionen in Halbzeugen, beispielsweise Rohren oder Drähten, die Eigenschaften daraus gefertigter Produkte sehr stark beeinflussen, beispielsweise die Korrosionsfestigkeit und das Ermüdungsverhalten von Nitinol-Stents, siehe z.B. US 2010/0274077 A1. Im Verlauf nachgelagerter Umformprozesse bilden sich um die schwerer umformbaren Inklusionen häufig Hohlräume (Voids) aus, die zusätzliche Angriffspunkte für Korrosion bilden, siehe z.B. US 2012/0039740 A1.

Nitinol ist ein Implantatwerkstoff. Es ist bekannt, dass Gefügeinhomogenitäten und Inklusionen dessen Dauerfestigkeit wie auch die Korrosionsbeständigkeit reduzieren können, siehe z.B. die Zitierungen in US 8,430,981 B1 von C. M. Wayman, Smart Materials - Shape Memory Alloys, MRS Bulletin 18 (1993) 49-56 und M. Nishida, C. M. Wayman, T. Honma, Precipitation processes in nearequiatomic TiNi shape memory alloys, Metallurgical Transactions A 17 (1986) 1505-1515 sowie H. Hosoda, S. Hanada, K. Inoue, T. Fukui, Y. Mishima, T. Suzuki, Martensite transformation temperatures and mechanical properties of ternary NiTi alloys with offstoichiometric compositions, Intermetallics 6 (1998) 291-301.

Der Einfluss von Inklusionen auf das Ermüdungsverhalten von NiTi ist beispielsweise beschrieben in Tak Ahiro Sawaguchi, Gregor Kausträter, Alejandro Yawny, Martin Wagner, Gunther Eggeler, Crack initiation and propagation in 50.9 At. pct Ni-Ti pseudoelastic shape-memory wires in bending-rotation fatigue, Metallurgical and Materials Transactions A 34 (2003) 2847-2860 und in M. Rahima, J. Frenzel, M. Frotscher, J. Pfetzing-Micklich, R. Steegmüller, M. Wohlschlögel, H. Mughrabi, G. Eggeler, Impurity levels and fatigue lives of pseudoelastic NiTi shape memory alloys, Acta Materialia 61 (2013) 3667-3686. Zum Einfluss von Inklusionen auf die Korrosionsbeständigkeit siehe die Literaturstelle Markus Wohlschlögel, Rainer Steegmüller and Andreas Schüßler, Potentiodynamic polarization study on electropolished nitinol vascular implants, Journal of Biomedical Materials Research Part B: Applied Biomaterials 100B (2012) 2231-2238.

Besonders bei filigranen Implantatstrukturen (Stents, Herzklappenrahmen), die durch die Körperflüssigkeiten einer zusätzlichen Korrosionsermüdung ausgesetzt sind, wirken sich erstarrungsbedingte Inklusionen negativ auf das Ermüdungs- und Korrosionsverhalten aus. Daher betreiben die Hersteller von Nitinol-Halbzeugen einen großen Aufwand, um Nitinol-Legierungen mit möglichst geringen Inklusionen zu produzieren, beispielsweise durch die Verwendung hochreiner Ausgangsmaterialien, z.B. dem sogenannten "iodide-reduced titanium crystal bar", mit der Konsequenz sehr hoher Produktionskosten.

Durch Prozessoptimierungen konnte in den letzten Jahren der Volumenanteil der Inklusionen zwar deutlich reduziert werden, es treten aber nach wie vor störende Inklusionen auf, die immer wieder als bruchauslösend identifiziert werden können, insbesondere im Fatigue-Verhalten. Das nach dem Stand der Technik mittels Vakuumschmelztechnologie hergestellte Nitinol enthält derzeit noch immer unerwünschte Inklusionen, deren Entstehung auch bei Verwendung höchst reiner, sehr teurer Ausgangsrohstoffe nicht vollständig vermieden werden kann. In der Fachwelt gibt es noch immer Diskussionen betreffend die Auswirkungen von Inklusionen in Nitinol. Nahezu alle technischen Legierungen enthalten Inklusionen, und die Fachwelt geht derzeit noch davon aus, dass Nitinol nicht geschmolzen werden kann, ohne dass sich Inklusionen bilden und diese omnipräsent sind. Man nimmt an, dass ihre Größe, Verteilung und Art bis zu einem gewissen Grad beeinflusst werden kann und dass kleinere, rundere und weniger Inklusionen zu einem besseren Ermüdungsverhalten führen können, aber es ist nach dem Stand der Technik bisher nicht gelungen, Nitinol mit keinen, nahezu keinen oder sehr wenigen, sehr kleinen Inklusionen herzustellen.

Nach gängigen Standards darf der Volumenanteil der Inklusionen und Voids in medizinisch verwendetem Nitinol max. 2,8 % betragen und diese dürfen nicht größer als 39 µm sein. Technische Weiterentwicklungen ermöglichen heute Inklusionsgrößen zwischen 10 µm und 20 µm. Insbesondere die zunehmende Miniaturisierung medizinischer Implantate (Neurostents) und die steigenden Qualitätsanforderungen (Herzklappenrahmen) erfordern jedoch weitere Anstrengungen, den erreichten Stand weiter zu verbessern.

Ausgehend von diesem Stand der Technik liegt der vorliegenden Erfindung die Aufgabe zugrunde, ein verbessertes Verfahren und eine entsprechende Vorrichtung zu schaffen, mit denen ein Werkstoff derart umgeschmolzen und/oder umlegiert werden kann, dass das gebildete Halbzeug über einen wesentlichen Anteil seines Querschnittes ein Gefüge mit Merkmalen einer raschen Erstarrung aufweist. Insbesondere liegt der vorliegenden Erfindung die Aufgabe zugrunde, in einer bevorzugten Ausführungsform ein Verfahren und eine entsprechende Vorrichtung zu schaffen, die es ermöglichen, Halbzeuge aus Nitinol herzustellen, die keine störenden Inklusionen mehr aufweisen, d.h. keine, nahezu keine oder sehr wenige, sehr kleine Inklusionen aufweisen.

Diese Aufgabe wird erfindungsgemäß durch ein Verfahren mit den Merkmalen des beigefügten Anspruchs 1 bzw. eine Vorrichtung mit den Merkmalen des Vorrichtungsanspruchs 19 gelöst. Bevorzugte Ausgestaltungen, Weiterbildungen und Verwendungen der Erfindung ergeben sich aus den nebengeordneten und abhängigen Ansprüchen und der nachfolgenden Beschreibung mit zugehörigen Zeichnungen.

Ein erfindungsgemäßes Verfahren zum Herstellen metallischer Halbzeuge durch Umschmelzen und/oder Umschmelzlegieren metallischer Werkstoffe, wobei die Erstarrung der Schmelze mittels einer Kühleinrichtung mit einer hohen Abkühlrate erfolgt, weist die Besonderheit auf, dass der Werkstoff mittels energiereicher, fokussierter Strahlung in einer Schmelzkapillare in dem Werkstoffvolumen selektiv lokal geschmolzen wird, der Wärmeentzug aus der Schmelzkapillare über das an die Schmelzkapillare angrenzende, nicht umgeschmolzene, kalte Werkstoffvolumen durchgeführt wird, gleichzeitig mit dem Schmelzen des Werkstoffs mittels der fokussierten Strahlung zum Abführen der von der Schmelzkapillare an das Werkstoffvolumen abgegebenen Wärme das Werkstoffvolumen mittels einer Wärmesenke gekühlt wird, wobei die Wärmesenke an zumindest einen Teil einer wenigstens einen Fläche des Werkstoffvolumens gut wärmeleitend angekoppelt ist und die Wärmesenke mittels einer Kühlflüssigkeit gekühlt wird, die Wärmesenke an einer Stelle des Werkstoffvolumens gut wärmeleitend an das Werkstoffvolumen angekoppelt ist, die nahe zu dem Fokus der fokussierten Strahlung auf dem Werkstoff bzw. zu der Schmelzkapillare liegt, und zum Schmelzen des die Schmelzkapillare umgebenden Werkstoffvolumens des Werkstoffs der Fokus der fokussierten Strahlung über den Werkstoff bzw. die Schmelzkapillare durch den Werkstoff bewegt wird, wobei der Fokus der energiereichen, fokussierten Strahlung und der bestrahlte Werkstoff derart relativ zueinander bewegt werden, dass die gewünschte Fläche von dem Fokus überstrichen wird.

Die Erfindung besteht somit in einem selektiven Umschmelzverfahren mittels energiereicher, fokussierter Strahlung, die in einem Werkstoff eine Schmelzkapillare, d.h. einen Schmelzkanal mit geringem Durchmesser, bildet, wobei durch schnelles lokales Erhitzen und rasches Abkühlen der Schmelze die Ausbildung von Inklusionen in der unterkühlten Schmelze verhindert wird. Das erfindungsgemäße Verfahren dient zum Umschmelzen und/oder (Um)Legieren von vorzugsweise platten-, band-, stab-, rohrstab-, draht- oder rohrförmigen Werkstoffen als Ausgangshalbzeuge, wobei das Schmelzen mittels energiereicher, fokussierter Strahlung in einem kleinen lokalen Bereich in Form einer Schmelzkapillare erfolgt, die kontinuierlich durch das Werkstoffvolumen geführt wird, und durch eine intensive Kühlung des Werkstoffs nahe bei der Schmelzkapillare mittels einer gekühlten Wärmesenke eine rasche Erstarrung/Abschreckung des aufgeschmolzenen Werkstoffs erzwungen wird.

Die für eine ausscheidungsfreie Erstarrung erforderliche hohe Abkühlrate wird primär durch die Selektivität des Schmelzvolumens, d.h. durch ein lokales kleines Schmelzvolumen in einer Schmelzkapillare ermöglicht. Der Erfindung liegt zugrunde, durch Einsatz hochenergetischer, fokussierter Strahlung, das Aufschmelzvolumen derart zu reduzieren, dass der schnelle Wärmeentzug durch den unmittelbar an die Schmelzkapillare angrenzenden Werkstoff zu einer stark unterkühlten Schmelze führt. Zur Erzielung einer hohen Abkühlrate bei einem kontinuierlichen, stabil durchgeführten erfindungsgemäßen Verfahren wird die von der Strahlung in den Werkstoff zum Schmelzen eingebrachte Wärme abgeführt. Hierzu dient eine ortsnahe, effektive Kühlung des Werkstoffs im Bereich der Schmelzkapillare mit einer Wärmesenke, die von einer Kühlflüssigkeit gekühlt wird.

Eine entsprechende erfindungsgemäße Vorrichtung zum Herstellen metallischer Halbzeuge durch Umschmelzen und/oder Umschmelzlegieren metallischer Werkstoffe, wobei die Erstarrung der Schmelze mittels einer Kühleinrichtung mit einer hohen Abkühlrate erfolgt, weißt die Besonderheit auf, dass sie eine Strahleinrichtung zum Erzeugen energiereicher, fokussierter Strahlung aufweist, die zum selektiven lokalen Schmelzen des Werkstoffs in einer Schmelzkapillare in dem Werkstoffvolumen ausgebildet ist, wobei der Wärmeentzug aus der Schmelzkapillare über das an die Schmelzkapillare angrenzende, nicht umgeschmolzene, kalte Werkstoffvolumen durchgeführt wird, eine Kühleinrichtung zum Kühlen mindestens einer Wärmesenke aufweist, die zum Abführen der von der Schmelzkapillare an das Werkstoffvolumen abgegebenen Wärme durch Kühlen des Werkstoffvolumens mittels der Wärmesenke ausgebildet ist, während gleichzeitig der Werkstoff mittels der fokussierten Strahlung geschmolzen wird, wobei die Wärmesenke an zumindest einen Teil einer wenigstens einen Fläche des Werkstoffvolumens gut wärmeleitend ankoppelbar ist und die Wärmesenke mittels einer Kühlflüssigkeit kühlbar ist, die Wärmesenke an einer Stelle des Werkstoffvolumens gut wärmeleitend an das Werkstoffvolumen ankoppelbar ist, die nahe zu dem Fokus der fokussierten Strahlung auf dem Werkstoff bzw. zu der Schmelzkapillare in dem Werkstoff liegt, und derart ausgebildet ist, dass zum Schmelzen des die Schmelzkapillare umgebenden Werkstoffvolumens des Werkstoffs der Fokus der fokussierten Strahlung über den Werkstoff bzw. die Schmelzkapillare durch den Werkstoff bewegbar ist, wobei der Fokus der energiereichen, fokussierten Strahlung und der bestrahlte Werkstoff derart relativ zueinander bewegbar sind, dass die gewünschte Fläche von dem Fokus überstrichen wird.

Im Rahmen der Erfindung wurde gefunden, dass in Nitinol die sekundären Phasen je nach Erstarrungsgeschwindigkeit mehr oder weniger vergröbert vorliegen. Im Rahmen der Erfindung wurde ferner gefunden, dass der hohe Anteil an Inklusionen in nach dem Stand der Technik hergestelltem Nitinol auf der geringen Abkühlgeschwindigkeit bei dessen gebräuchlicher Gussherstellung beruht und dass bei einem schnellen, aktiven Abkühlen die Ausbildung von Inklusionen in der unterkühlten Schmelze verhindert wird. Das Auflösen der Inklusionen erfolgt somit durch Umschmelzen, kombiniert mit einer hohen Abkühlrate, die ein Entstehen der Ausscheidungen verhindert.

Die Abkühlrate könnte bei einer Herstellung nach dem Stand der Technik prinzipiell dadurch gesteigert werden, dass die zum Schmelzen in den Werkstoff eingebrachte Wärmemenge reduziert wird. Zum Auflösen der unerwünschten Phasen muss jedoch die Schmelztemperatur überschritten werden, also eine hohe Wärmemenge eingebracht werden. Der Erfindung liegt die Erkenntnis zugrunde, dass dennoch eine hohe Abkühlrate erzielt werden kann, indem die in den Werkstoff eingebrachte Wärmemenge mittels energiereicher, fokussierter Strahlung selektiv lokal nur in ein verringertes, kleines Schmelzvolumen, die einen Schmelzkanal bildende Schmelzkapillare, eingebracht wird, die schnell abgekühlt werden kann. Die rasche Erstarrung des geschmolzenen Materials in dem Schmelzkanal erfolgt durch Wärmeentzug aus der Schmelzkapillare über das an die Schmelzkapillare angrenzende, nicht umgeschmolzene, kalte Werkstoffvolumen (Selbstabschreckung), das seine Wärme an eine oder mehrere eng wärmeleitend angekoppelte Wärmesenken abführt, wobei die Wärmesenke an zumindest einen Teil einer wenigstens einen Fläche des Werkstoffvolumens eng wärmeleitend angekoppelt ist und die Wärmesenke selbst mittels einer Kühlflüssigkeit gekühlt wird.

Als direktes Kühlmedium für die Schmelzkapillare wirkt somit das der Schmelzkapillare benachbarte, nicht verflüssigte Grundmetall, an dem die Schmelze aufgrund der Stoffgleichheit epitaktisch am Grundgefüge kristallisiert/erstarrt. Dem sehr kleinen Schmelzvolumen der Schmelzkapillare wird dabei die Wärme nahezu schlagartig durch die Umgebung entzogen. Das Grundmetall leitet den Wärmeinhalt der Schmelze in der Schmelzkapillare ohne Übergangsverluste an eine mit gekühlte Wärmesenke ab, die mittels einer Kühlflüssigkeit gekühlt wird.

Da die Umschmelzung vorzugsweise im Vakuum erfolgt, scheidet in der Regel die Verwendung einer direkten Gas- oder Wasserkühlung als alleinige Wärmesenke aus. Eine Gaskühlung eignet sich in der Regel nicht zum Ableiten einer hohen Wärmemenge, und die Wärmekapazität von Gasen und Flüssigkeiten ist zumeist nicht so hoch, dass sie unmittelbar als Wärmesenke an den bearbeiteten Werkstoff zum Kühlen des Werkstoffs wärmeleitend angekoppelt werden können. In besonderen Ausführungsformen, insbesondere wenn keine sehr rasche Abkühlung erforderlich ist, kann aber auch vorgesehen sein, dass eine Gas- oder insbesondere Flüssigkeitskühlung als alleinige Wärmesenke ausreichend ist. In bevorzugten Ausführungsformen wird allerdings eine Wärmesenke verwendet, die aus einem massiven, gut wärmeleitenden Material besteht, das die Wärme aus dem bearbeiteten Werkstoff schnell und effektiv ableitet und selbst mittels einer Kühlflüssigkeit gekühlt wird. Durch eine Wärmesenke aus einem thermisch hochleitfähigen Material wird auch eine punktuelle Überhitzung der Kühlflüssigkeit infolge Dampfblasenbildung (Leidenfrost-Effekt) vermieden. Besonders gut geeignete, hoch wärmeleitfähige Materialien hierfür sind Kupfer oder Silber.

Die Wärmesenke kontaktiert den umzuschmelzenden Werkstoff in größtmöglicher Nähe zu der Schmelzkapillare möglichst großflächig und spaltfrei. Die Wärmesenke kann je noch Form des bearbeiteten Werkstoffs als separate, externe Halteeinrichtung, z.B. als Druck-, Klemm-, Press- oder Spanneinrichtung (z.B. Druckbacken, Halteplatten, Spanneinrichtung, Spannzange, Spannfutter) ausgebildet sein, die die Oberfläche des bearbeiteten Werkstoffs von außen kontaktiert, oder eine an den Werkstoff angeformte Wärmesenke sein, z.B. ein Kühlmantel aus einem (aufgeschrumpften, aufgepressten oder umgossenen) Rohr, insbesondere Kupferrohr, oder ein Kühlkern aus einem (eingeschrumpften oder aufgeweiteten) Kern oder Rohr, insbesondere Kupferkern oder Kupferrohr. Die verschiedenen Varianten können zur Erzielung einer sehr hohen Abkühlrate auch miteinander kombiniert werden.

Die Wärmesenke selbst wird mittels einer Kühlflüssigkeit gekühlt, beispielsweise mit Wasser, tiefgekühltem Alkohol oder Flüssigstickstoff, insbesondere über einen äußeren Kühlkreislauf. Die Kühlflüssigkeit kann die Wärmesenke umströmen. Vorzugsweise wird die Wärmesenke von der Kühlflüssigkeit durchströmt, wozu Kühlkanäle oder Kavitäten in die Wärmesenke zum Durchleiten der Kühlflüssigkeit durch die Wärmesenke eingebracht sind.

Zum Umschmelzen des gesamten Werkstoffvolumens, eines sehr großen Teils des Werkstoffvolumens oder eines gewünschten Teils des Werkstoffvolumens des Werkstoffs wird der Fokus der fokussierten Strahlung über den Werkstoff bzw. die Schmelzkapillare durch den Werkstoff bewegt. Dabei werden der Fokus der energiereichen, fokussierten Strahlung und das bestrahlte Material derart relativ zueinander bewegt, dass die gewünschte Fläche überstrichen wird. Die Bewegung kann durch ein Bewegen des Fokus bei stationärem bestrahltem Material, durch ein Bewegen des bestrahlten Materials bei stationärem Fokus oder durch ein Bewegen sowohl des Fokus als auch des bestrahlten Materials erfolgen und linear, zickzackförmig, spiralförmig, kreisförmig oder andersförmig sein.

Damit eine hohe Abkühlrate erzielt wird, ist die Wärmesenke an einer Stelle des Werkstoffvolumens gut wärmeleitend an das Werkstoffvolumen angekoppelt, die nahe zu dem Fokus der fokussierten Strahlung auf dem Werkstoff bzw. zu der Schmelzkapillare in dem Werkstoff liegt. Nahe zu in diesem Sinne bedeutet dicht bei, dicht an, unmittelbar angrenzend oder unmittelbar benachbart. Die Länge des Weges, den die Wärme von der Schmelzkapillare durch den bearbeiteten Werkstoff zu der Wärmesenke nehmen muss, sollte so kurz wie möglich sein, um eine effiziente Kühlung der Schmelzkapillare mittels der Wärmesenke über den sie umgebenden Werkstoff zu erzielen. In vorteilhaften Ausführungsformen beträgt der Abstand des Fokus der fokussierten Strahlung auf dem Werkstoff zu der Wärmesenke bzw. der Abstand der Schmelzkapillare in dem Werkstoff zu der Wärmesenke weniger als das 50fache, vorzugsweise weniger als das 25fache und besonders bevorzugt weniger als das 10fache des Durchmessers der Schmelzkapillare. Der Abstand bezieht sich dabei auf den nicht umgeschmolzenen bzw. nicht geschmolzenen Wandrestquerschnitt in dem Werkstoff. Wenn eine maximale Abkühlrate angestrebt wird, kann der Fokus der Strahlung bzw. die Schmelzkapillare bis auf einen Restabstand an die Wärmesenke herangeführt werden, der dem doppelten Durchmesser der Schmelzkapillare entspricht.

Beim Umschmelzen von Rohren mit Innenkühlung befindet sich die Wärmesenke direkt unterhalb der Schmelzkapillare und entzieht somit ohne jedweden Umweg dem vor wie nachgelagerten Werkstoffvolumen Energie. Es wird hiermit eine voreilende wie nacheilende Wärmeströmung abgeführt, eine nähere Platzierung ist nicht möglich. Bei Wanddicken größer als 2 mm bzw. massiven Stäben oder Blöcken ergibt sich durch eine ergänzende Außenkühlung eine zusätzliche Beschleunigung der Wärmeableitung, die durch schräges Einstrahlen der fokussierten Strahlung noch gesteigert werden kann.

Je geringer die Wärmeleitfähigkeit des Werkstoffs ist, umso mehr ist es erforderlich, die Wärmesenke dicht an der Schmelzkapillare zu platzieren. Weil die Wärmeleitfähigkeit von Nitinol sehr gering ist, ist dieses Merkmal insbesondere bei diesem Werkstoff wichtig. Durch die Kombination der Kühlung der Schmelzkapillare über das sie umgebende Grundmetall mit der intensiven Kühlung durch eine eng angekoppelte Wärmesenke, die ihre Wärme an einen äußeren Kühlkreislauf abführt, kann eine sehr hohe Abkühlrate erzielt werden, sodass eine sehr rasche Erstarrung erzwungen wird.

Aufgrund der hohen Temperatur in der Dampfkapillare werden alle Ausscheidungen/Fremdphasen in kürzester Zeit vollständig aufgelöst. Die Metallschmelze umfließt hierbei die Dampfkapillare und erstarrt auf deren Rückseite, d.h. "stromabwärts" bezogen auf die Bewegungsrichtung des Fokus auf dem Werkstoff. Die ausgeprägte Bewegung des Materials der Schmelzkapillare, d.h. die Umströmung des Materials in einer sogenannten Marangoni-Konvektion, führt zu einer intensiven und homogenen Durchmischung des Materials in der Schmelzkapillare. Während der fortlaufenden Umschmelzung erfolgt der Wärmeübergang in drei Raumrichtungen. Die epitaktische Erstarrung zum Gitter des Grundmetalls bewirkt hierbei eine sehr hohe Wärmeableitung.

Durch eine rasche Abkühlung der kleinvolumigen Schmelzkapillare kann die Bildung von Ausscheidungen vollständig unterdrückt werden. Somit kann mittels einer lokalen, fokussierten bewegten Schmelzkapillare durch schnelles Abkühlen ein massives Halbzeug gebildet werden, dessen Erstarrungs-Gussgefüge keine Ausscheidungen bzw. Inklusionen aufweist. Das erfindungsgemäße Verfahren könnte man somit als "Focused Quench Casting" bezeichnen.

Die Prozessparameter werden werkstoffspezifisch so gewählt, dass der Schmelzpunkt der aufzulösenden Phasen erreicht wird. Das in dem schmalen Schmelzkanal vorliegende geringe Schmelzvolumen erstarrt durch Wärmeableitung in die gekühlte Umgebung mit hoher Erstarrungsgeschwindigkeit. Die Erstarrungsgeschwindigkeit ist über die Vorschubgeschwindigkeit, d.h. die Geschwindigkeit, mit der sich die Schmelzkapillare durch den Werkstoff bewegt, einstellbar. Über die Steuerung der Erstarrungsgeschwindigkeit können der Typ, der Volumenanteil und die Größe der Ausscheidungen beeinflusst und eingestellt werden.

Diese erfindungsgemäße Erkenntnis lässt sich nicht nur bei Nitinol, sondern auch bei anderen Werkstoffen vorteilhaft einsetzen, um einen homogenen Gefügeaufbau bzw. eine äußerst feine Verteilung ausgeschiedener Phasen zu erzielen oder Halbzeuge herzustellen oder zu bearbeiten.

In bevorzugten Ausführungsformen wird als energiereiche, fokussierte Strahlung ein Elektronenstrahl, Laserstrahl, Ionenstrahl oder Plasmastrahl verwendet. Mit diesen Ausführungsformen lässt sich sowohl eine hohe Energie als auch eine hohe Energiedichte im Fokus der Strahlung auf dem Werkstoff erzielen. Bevorzugt ist in dieser Hinsicht ein Elektronenstrahl. Die energiereiche, fokussierte Strahlung kann ein Dauerstrahl oder eventuell auch ein intermittierender, gepulster Strahl sein.

Im Stand der Technik ist die Elektronenstrahl-Randschichtbehandlung bekannt, siehe z.B. US 2005/0263219 A1. Sie dient zur Behandlung der Randschichten metallischer Werkstoffe mit einem Elektronenstrahl zum Schutz vor Verschleiß und Korrosion. Man unterscheidet zwischen Festphasenprozessen (Härten, Glühen, Anlassen) und Flüssigphasenprozessen (Umschmelzen, Legieren, Dispergieren, Auftragen). Im Unterschied zu der Erfindung erfolgt dabei aber keine Wärmeabfuhr über eine mit einer Kühlflüssigkeit gekühlte Wärmesenke und es wird kein Halbzeug bzw. Zwischenprodukt, sondern ein Endprodukt bearbeitet. Ferner wird bei der Elektronenstrahl-Randschichtbehandlung nur die Oberfläche behandelt, wogegen bei der Erfindung das Gefüge eines massiven Materials in einer großen Tiefe und zu 100 % oder nahezu 100 % seines Querschnitts und/oder seines Volumens umgeschmolzen wird. Eine Variante hierzu ist die Plasma- Randschichtbehandlung, siehe z.B. US 2008/0000881 A1.

In Analogie zu dem bekannten Tiefschweißen könnte die Erfindung als Tiefstrahlumschmelzen bzw. Tiefstrahlumlegieren bezeichnet werden, da sie für alle verwendeten energiereichen, fokussierten Strahlungen, d.h. auch für einen bevorzugten Elektronenstrahl, eine Schmelzkapillare erzeugt, wie sie als Dampfkapillare aus dem Tiefschweißen mit einem Laserstrahl bekannt ist. Das Laserstrahlschweißen wird unterschieden in Wärmeleitungsschweißen, bei dem der Werkstoff nur an der Oberfläche schmilzt, und das Lasertiefschweißen oder Tiefschweißen, das auf der Erzeugung einer Dampfkapillare (auch Keyhole genannt) im Material beruht. Dabei ist die geringe thermische Belastung des Werkstückes von Bedeutung, die ein verzugsarmes bzw. verzugsfreies Bearbeiten ermöglicht. Bei hohen Strahlintensitäten im Fokus bildet sich in der Schmelze in Strahlrichtung eine Dampfkapillare, ein mit Metalldampf oder teilionisiertem Metalldampf gefüllter, schlauchförmiger Hohlraum, der auch Keyhole genannt wird, in der Tiefe des Werkstückes aus. Der Werkstoff wird dadurch auch in der Tiefe aufgeschmolzen, und hierbei kann die Tiefe der Schmelzzone ein Vielfaches ihrer Breite betragen. Die Dampfkapillare erhöht aufgrund von Mehrfachreflexionen an den Wandungen die Absorption der Laserstrahlung im Material, wodurch ein gegenüber dem Wärmeleitungsschweißen vergrößertes Schmelzvolumen erzeugt werden kann.

Ausreichende Intensität vorausgesetzt, wird die Schmelztemperatur erreicht und es setzt lokale Verdampfung ein. Wird die zugeführte Leistung weiter gesteigert, bildet sich schließlich ein Dampfkanal aus, dessen Geometrie von den Strahl- und Prozessparametern beeinflusst wird. Das Entstehen der Dampfkapillare, die auch als Keyhole bezeichnet wird, ist charakteristisch für das Tiefschweißen. Der Druck des verdampfenden Materials wirkt dem hydrostatischen Druck der umgebenden Schmelze sowie deren Oberflächenspannungen entgegen und verhindert das Schließen der Kapillare. Durch die Relativbewegung zwischen Laserstrahl und Werkstück wird stetig neues Material aufgeschmolzen, das die Dampfkapillare seitlich umströmt und dahinter infolge Energietransport durch Leitung und Konvektion wieder erstarrt.

Das Schmelzen erfolgt bei der Erfindung mit einer so hohen Energiedichte, dass sich ein Schmelzkanal in Analogie zum Tiefschweißeffekt ausbildet, der kontinuierlich durch das umzuschmelzende Werkstoffvolumen geführt wird. Der den Dampfkanal umgebende schmale Schmelzfilm fließt hinter dem sich vorwärtsbewegenden Dampfkanal wieder zusammen und erstarrt durch Wärmeabgabe. Die Erstarrung erfolgt hierbei umso rascher, je schlanker der Schmelzkanal ausgebildet ist und je höher die Vorschubbewegung abläuft.

Ein erfindungsgemäß hergestelltes Halbzeug kann in der vorliegenden Form verwendet oder in konventionellen Umformprozessen zu einem endgültigen Produkt weiterverarbeitet werden. Beispielsweise kann das mit einem erfindungsgemäßen Umschmelzen oder Umlegieren gewonnene Erstarrungs-Gussgefüge in einem anschließenden Wärmebehandlungsprozess, gefolgt von einem weiteren Warm- und/oder Kaltumformprozess, homogenisiert werden, bevor es in einem bestehenden Regelprozess weiterverarbeitet wird. Ein erzeugter Werkstoff kann z.B. über einen Strangpressprozess zu einem Draht ausgepresst werden oder durch Schmieden oder andere spanlose Umformprozesse wie Walzen und Ziehen bearbeitet werden. Nicht umgeschmolzene Bereiche des Werkstoffs, z.B. eine an eine Kühlfläche angrenzende, nicht umgeschmolzene Randschale in dem Werkstoff oder ein nicht umgeschmolzener Kern des Werkstoffs, oder eine an den Werkstoff angeformte Wärmesenke, z.B. ein Kupfermantel oder Kupferkern, können vor, im Verlauf oder auch nach der abschließenden Endumformung des erzeugten massiven Halbzeugs durch mechanische oder chemische Prozesse entfernt werden, beispielsweise durch Überfräsen, Überschleifen oder durch Ausbohren analog zur Rohrfertigung.

Die folgende Tabelle zeigt die Vorteile in der Inklusionsgröße von erfindungsgemäß hergestelltem Nitinol. Dargestellt ist das Ergebnis metallographischer Untersuchungen an Nitinol-Halbzeugen, die nach dem Stand der Technik (VAR) und nach dem erfindungsgemäßen Verfahren durch Elektronenstrahlumschmelzen mit aktiver Abschreckung hergestellt wurden. Die Untersuchungsmethode wurde optimiert, um die geringe Größe von Inklusionen des Typs Ti₂NiOₓ erkennbar zu machen.

| | VAR | Erfindung |
|---|---|---|
| Flächenanteil der Inklusionen | 0,73 % | 0,15 % |
| Durchschnittliche Größe der Inklusionen | 2,80 µm | 0,40 µm |
| Maximale Größe der Inklusionen | 16,5 µm | 1,54 µm |

Man erkennt, dass die Erfindung erhebliche Vorteile erzielt, da sich der Flächenanteil der Inklusionen, die durchschnittliche Größe der Inklusionen und die maximale Größe der Inklusionen signifikant verringert. Die Tabelle zeigt Ergebnisse einfacher Ausführungsformen der Erfindung. Es hat sich gezeigt, dass mit verbesserter Prozessführung, insbesondere einer höheren Abkühlrate, die Inklusionen auch vollständig oder nahezu vollständig vermieden werden können. Mit der Erfindung kann ein hochreines, keine, nahezu keine oder nur sehr wenige Inklusionen enthaltendes Material mit einer homogenen Verteilung von Inklusionen hergestellt werden, die viel kleiner als nach dem Stand der Technik sind. Durch das Veredeln (auch Refining genannt) von Nitinol durch selektives Umschmelzen mittels energiereicher Strahlung und rasches Erstarren gemäß dem erfindungsgemäßen Verfahren lassen sich die Fremdphasen und Inklusionen gänzlich vermeiden oder auflösen bzw. können in nicht störender feinster Verteilung gleichmäßig im Gefüge dispergiert werden. Ferner lassen sich mit der Erfindung kompakte, massive Halbzeuge mit einem großen Volumen umschmelzen bzw. umlegieren oder herstellen, wobei dennoch eine hohe Abkühlrate erzielt wird. Die Erfindung bietet somit erhebliche Vorteile gegenüber dem Stand der Technik.

Hinsichtlich der Vorteile der Erfindung, insbesondere bei Nitinol, wird auch auf folgendes hingewiesen. Die Biegewechselfestigkeit eines Materials wird bestimmt durch:
(i) Das Belastungsniveau (Dehnung/Scherung),
(ii) Strukturfehler (Gefügeinhomogenitäten/Inklusionen, Voids)
(iii) und gegebenenfalls überlagerte Korrosionsermüdung.

Bei einer Biegebelastung liegt das Spannungsmaximum (aufgrund der größten Dehnung in der Randfase) immer an der Oberfläche. Folglich beginnt die Materialermüdung in randnahen Bereichen. Durch einen erfindungsgemäßen Umschmelzprozess von Nitinol mit rascher Erstarrung werden vorhandene sekundäre Phasen aufgelöst. Die Matrixzusammensetzung wird hierdurch titanreicher, wodurch die Umwandlungstemperatur ansteigt. Bei Nitinol besteht eine ausgeprägte Temperaturabhängigkeit der "Plateauspannung" (je 1 °C steigt die Spannung um 7 N/mm²). Durch Anheben der Umwandlungstemperatur in einer oberflächennahen Randzone wird folglich eine Reduzierung der Randfasenspannungen erzielt. Die Gefügeinhomogenitäten werden durch das erfindungsgemäße Umschmelzen und rasche Erstarren vollständig aufgelöst. Ebenso werden vorliegende Voids geschlossen. Die im bisher nach dem Stand der Technik verwendeten Werkstoff vorliegenden, oberflächennahen bzw. freiliegenden Inklusionen sowie Voids begünstigen eine Korrosionsermüdung durch die Elektrolyte in den Körperflüssigkeiten, bei der Erfindung werden die Inklusionen vermieden und daher die Korrosionsfestigkeit erhöht.

Durch ein erfindungsgemäßes Reduzieren bzw. Auflösen oder Vermeiden der Inklusionen werden obige Mängel vermieden, insbesondere in Nitinol. Dies führt zu einer höheren Dauerfestigkeit, einem verbesserten Ermüdungsverhalten und einer gesteigerten Korrosionsbeständigkeit und Biokompatibilität. Damit lassen sich mit der Erfindung vorteilhafte Halbzeuge aus Nitinol herstellen, z.B. für Implantate wie geflochtene Stents oder flexible Führungs- und Leitungsdrähte.

Die Erfindung ist aber nicht nur bei der Herstellung von Nitinol vorteilhaft verwendbar, sondern kann allgemein zum Umschmelzen und/oder Umschmelzlegieren metallischer Werkstoffe benutzt werden, um die im geschmolzenen, flüssigen Zustand bzw. bei hoher Temperatur vorliegende gegenseitige Löslichkeit über einen sehr raschen Erstarrungsvorgang einzufrieren. Auf diese Weise ist die schmelzmetallurgische Herstellung von Werkstoffen, die bisher nur aufwändig über pulvermetallurgische Verfahren hergestellt werden konnten, mit einem großen massiven Volumen möglich.

Andere Beispiele für Legierungen, die mit dem erfindungsgemäßen Verfahren eine maßgebliche Gefügeverbesserung erlangen können bzw. deren Herstellung überhaupt erst damit möglich ist, sind folgende.

Es können schwer mischbare Werkstoffe hergestellt werden, bei denen z.B. Schwierigkeiten wie keine Löslichkeit oder Dichteseigerung überwunden werden müssen. Ein Beispiel sind hochfeste Kupferwerkstoffe wie CuNb mit sehr guter elektrischer Leitfähigkeit und hoher Festigkeit. Beispiele möglicher Anwendungsgebiete sind Hochfeldmagnete, Wicklungen für Elektromotoren, gepulste Magnete mit hoher Flussdichte und dadurch hoher mechanischer Belastung oder Hochfrequenzspindeln mit hohen Fliehkräften. Aufgrund der sehr hohen Schmelztemperatur und der äußerst geringen gegenseitigen Löslichkeit ist der Werkstoff über konventionelle Schmelzmethoden nicht herstellbar. Ein nach dem Stand der Technik möglicher Fertigungsweg besteht in aufwändigen pulvermetallurgischen Prozessen über mechanisches Legieren in Kugelmühlen und anschließendem Verdichten über Strangpressen. Mit der Erfindung ist eine schmelzmetallurgische Herstellung möglich. Die hohe Temperatur in der Dampfkapillare sowie die Marangonikonvektion führen zu einer homogenen Durchmischung, während die hohe Abschreckgeschwindigkeit zu einer übersättigten Lösung und feinsten Niobausscheidungen führt.

Die Hochtemperatur-Formgedächtnislegierung TiTa stellt aufgrund des hohen Schmelzpunktes von Tantal hohe Anforderungen an die Schmelztechnologie. Beim konventionellen Elektronenstrahlschmelzen treten infolge zu geringer Abkühlgeschwindigkeit starke Inhomogenitäten durch Seigerung auf. Durch Umschmelzen bzw. Legieren mit der Erfindung lässt sich eine gute Homogenität erreichen.

Andere Anwendungsgebiete der Erfindung sind das Auflösen von Inklusionen, beispielsweise in Kobaltlegierungen, das Auflösen von Ausscheidungen, beispielsweise in Magnesiumlegierungen, das Auflösen von Inklusionen in WolframCarbid und in Cobalt-Basislegierungen, das Legieren schwer mischbarer Werkstoffe und das tiegelfreie Legieren hochschmelzender reaktiver Metalle.

Da die in Betracht gezogenen Legierungen in der Regel hochreaktiv sind, erfolgt der Umschmelzprozess vorzugsweise unter Schutzgas, beispielsweise Edelgas, oder vorzugsweise im Vakuum. Das Umschmelzen im Vakuum hat den weiteren Vorteil, dass dabei zusätzlich eine Werkstoffreinigung infolge Ausgasung und durch Abdampfen niedrigsiedender Verunreinigungen erfolgt.

Typische oder bevorzugte Parameter eines erfindungsgemäßen Verfahrens und einer entsprechenden Vorrichtung sind folgende. Der Durchmesser des Fokus der Strahlung auf dem Werkstoff und der Durchmesser der Schmelzkapillare in dem Werkstoff betragen 0,1 mm bis 10 mm, bevorzugt 0,1 mm bis 4 mm und besonders bevorzugt 0,2 mm bis 2 mm. Die Tiefe der Schmelzkapillare in dem Werkstoff beträgt 1 mm bis 400 mm. Die Streckenenergie kann typischerweise im Bereich von 5-1000 J/mm liegen, abhängig von der Verfahrgeschwindigkeit, der Umschmelztiefe und dem Werkstoff. Die Intensität der Strahlung kann beispielsweise 0,1 kW/mm² bis 25 kW/mm² oder mehr betragen, ebenfalls in Abhängigkeit von der Verfahrgeschwindigkeit, der Umschmelztiefe und dem Werkstoff. Die Verfahrgeschwindigkeit liegt im Bereich von 2 mm/sec bis 500 mm/sec. Die Abkühlrate des bearbeiteten Werkstoffs lässt sich über die Parameter der Strahlung, die Verfahrgeschwindigkeit und die Wärmeableitung bzw. Kühlung steuern. Hierdurch liegt die Abkühlrate im Bereich von 10²-10⁵ K/sec, bevorzugt über 10³ K/sec. Die Umschmelzgeschwindigkeit bzw. Erstarrungsgeschwindigkeit des bearbeiteten Werkstoffs, d.h. die Vorschubgeschwindigkeit, mit der er in einem kontinuierlichen Prozess aus einer gekühlten Spanneinrichtung herausschoben werden kann, kann je nach Wärmeleitvermögen und Erstarrungsbereich des umzuschmelzenden Werkstoffes im Bereich von 1 mm/sec bis 10 m/sec liegen. Der Außendurchmesser bearbeiteter Stäbe und Rohre kann im Bereich von 1 mm bis 200 mm liegen oder mehr betragen, wobei bei dicken Stäben gegebenenfalls ein nicht umgeschmolzener Kern verbleibt. Die Wandstärke von Rohren kann im Bereich von 0,2 mm bis 100 mm oder darüber liegen, bevorzugt über 1 mm. Bolzen, die auf ihrer Stirnseite bearbeitet werden, können bis ca. 400 mm hoch sein, bei einem Durchmesser von 2 mm bis 250 mm, bevorzugt über 10 mm und besonders bevorzugt über 20 mm. Die Dicke bearbeiteter Platten und Bänder ist nahezu beliebig, typischerweise 1 mm bis 5 mm oder bis 20 mm, und ihre in Strahlrichtung oder quer dazu gemessene Breite beträgt 1 mm bis 400 mm oder eventuell darüber.

Bei einem typischen Anwendungsbeispiel wurde Nitinol mit einem Elektronenstrahl mit einer Energie von 5 kW mit einer Größe des Fokus von 1 mm², einer Tiefe der Schmelzkapillare von 3 mm und einer Verfahrgeschwindigkeit von 50 mm/sec umgeschmolzen.

Die Erfindung wird nachfolgend anhand in den Figuren dargestellter Ausführungsbeispiele näher erläutert. Die darin beschriebenen Besonderheiten können einzeln oder in Kombination miteinander eingesetzt werden, um bevorzugte Ausgestaltungen der Erfindung zu schaffen. Gleiche oder gleich wirkende Teile werden in den verschiedenen Figuren mit denselben Bezugszeichen bezeichnet und gewöhnlich nur einmal beschrieben, auch wenn sie bei anderen Ausführungsformen vorteilhaft eingesetzt werden können. Es zeigen:
- Figur 1: ein erfindungsgemäßes Verfahren bei einem Rohr mit Innenkühlung und senkrechtem Strahl,
- Figur 2: ein erfindungsgemäßes Verfahren bei einem Rohr mit Außenkühlung und senkrechtem Strahl,
- Figur 3: ein erfindungsgemäßes Verfahren bei einem Rohr mit Innenund Außenkühlung und senkrechtem Strahl,
- Figur 4: ein erfindungsgemäßes Verfahren bei einem Rohr mit Außenkühlung und schrägem Strahl,
- Figur 5: ein erfindungsgemäßes Verfahren bei einem Stab mit Außenkühlung und schrägem Strahl,
- Figur 6: ein erfindungsgemäßes Verfahren bei einem Rohr mit Innenund Außenkühlung und schrägem Strahl
- Figur 7: die Figur 6 gegen Beginn der Bearbeitung,
- Figur 8: die Figur 6 gegen Ende der Bearbeitung,
- Figur 9: eine Ansicht zu Figur 8,
- Figur 10: erfindungsgemäße Verfahren bei einer Platte,
- Figur 11: ein abgewandeltes erfindungsgemäßes Verfahren bei einer Platte,
- Figur 12: ein erfindungsgemäßes Verfahren bei einem Bolzen mit Außenkühlung und
- Figur 13: ein erfindungsgemäßes Verfahren bei einem Bolzen mit Außenund Innenkühlung.

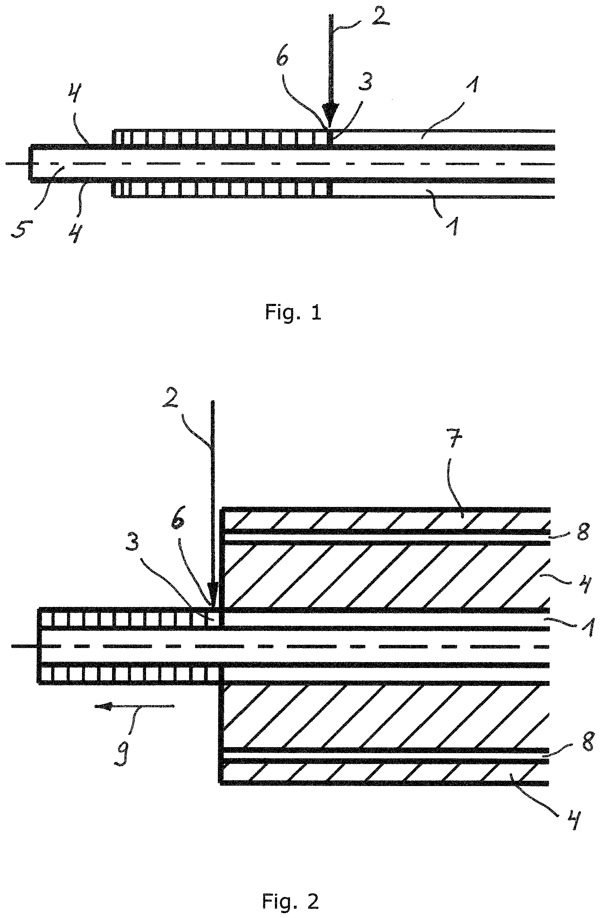

Die Figur 1 veranschaulicht ein erfindungsgemäßes Verfahren zum Herstellen metallischer Halbzeuge durch Umschmelzen eines metallischen Werkstoffes 1 in Form eines Rohres. Der Werkstoff wird mittels energiereicher, fokussierter Strahlung 2 in einer Schmelzkapillare 3 in dem Werkstoffvolumen selektiv lokal geschmolzen, wobei der Wärmeentzug aus der Schmelzkapillare 3 über das an die Schmelzkapillare 3 angrenzende, nicht umgeschmolzene, kalte Werkstoffvolumen durchgeführt wird. Gleichzeitig mit dem Schmelzen des Werkstoffs 1 mittels der fokussierten Strahlung 2 wird zum Abführen der von der Schmelzkapillare 3 an das Werkstoffvolumen abgegebenen Wärme das Werkstoffvolumen mittels einer Wärmesenke 4 gekühlt, wobei die Wärmesenke 4 an zumindest einen Teil einer wenigstens einen Fläche des Werkstoffvolumens gut wärmeleitend angekoppelt ist und die Wärmesenke 4 mittels einer Kühlflüssigkeit 5 gekühlt wird.

Die Figur 1 zeigt ein Beispiel, bei dem ein rohrförmiger Werkstoff 1 als Ausgangshalbzeug bearbeitet wird, wobei als Wärmesenke 4 für den rohrförmigen Werkstoff 1 ein aus einem hoch wärmeleitfähigen Material gebildetes Rohr verwendet wird, das von einer Kühlflüssigkeit 5 durchströmt wird. Die Wärmesenke 4 wird als ein von innen an den Werkstoff 1 angepresstes, gut wärmeleitfähiges Rohr realisiert.

In dem Beispiel von Figur 1 ist die Wärmesenke 4 ein Innenrohr aus einem Material mit guter Wärmeleitfähigkeit, das in den Werkstoff 1 eingebracht ist und von einer Kühlflüssigkeit durchströmt wird. Die spaltfreie Kontaktierung des Innenrohrs mit dem Werkstoff 1 kann beispielsweise durch Aufweiten des Innenrohres erzielt werden, wobei die beim Umschmelzen des Werkstoffs 1 auftretenden Schrumpfspannungen den Kontakt mit der Wärmesenke 4 zusätzlich unterstützen. Das mittels einer durchgeleiteten Flüssigkeit 5 gekühlte Innenrohr wirkt einerseits zur direkten Wärmeableitung und verhindert andererseits ein Durchsacken der Schmelze beim Bearbeiten. Die Wärmesenke 4 ist somit an einer Stelle des Werkstoffvolumens gut wärmeleitend an das Werkstoffvolumen angekoppelt ist, die nahe zu dem Fokus 6 der fokussierten Strahlung 2 auf dem Werkstoff bzw. zu der Schmelzkapillare in dem Werkstoff liegt.

Bei rotationssymetrischen Ausgangshalbzeugen (Bolzen, Stange, Draht) wird die Wärmesenke z.B. durch eine Spannzange gebildet. Bei rotationsförmigen Hohlkörpern kann die Wärmeabfuhr über eine äußere wie auch innenliegende Wärmesenke erzielt werden. Die innenliegende Wärmesenke kann aus massivem Material bestehen, wobei die Wärme über ein gekühltes Spannfutter abgeführt wird. Die Wärmesenke kann ebenso von einer Kühlflüssigkeit direkt durchflossen werden. Die in die Wärmesenke eingeleitete Wärme wird über einen externen Kühlkreislauf abgeführt.

Bei kurzen rohrförmigen Werkstoffen kann als Wärmesenke anstelle des gekühlten Innenrohres ein Kühlstab, z.B. ein Kupferstab, in das Kernloch des Werkstoffs eingebracht werden, wobei die aufgenommene Wärme über die Einspannung des Kühlstabs in eine gekühlte Spanneinrichtung abgeführt wird. Die Wärmesenke wird dann durch das Zusammenwirken des Kühlstabes mit der Spanneinrichtung gebildet. Bei längeren rohrförmigen Werkstoffen wird bevorzugt in das umzuschmelzende Ausgangsrohr ein Kupferrohr als Wärmesenke eingebracht, das direkt von der Kühlflüssigkeit durchflossen wird.

Zum Schmelzen des die Schmelzkapillare 3 umgebenden Werkstoffvolumens des Werkstoffs 1 wird der Fokus 6 der fokussierten Strahlung 2 über den Werkstoff 2 bzw. die Schmelzkapillare 3 durch den Werkstoff 1 bewegt, wobei der Fokus 6 der energiereichen, fokussierten Strahlung 2 und der bestrahlte Werkstoff 1 derart relativ zueinander bewegt werden, dass die gewünschte Fläche von dem Fokus 6 überstrichen wird. Der bereits umgeschmolzene Bereich des Werkstoffs 1 ist gestrichelt gezeichnet. Der Werkstoff 1 wird dabei bis in eine Tiefe umgeschmolzen, die der Tiefenausdehnung der Schmelzkapillare 3 entspricht. Das kann die gesamte Materialstärke des Werkstoffs 1, hier die Wandstärke des Rohres, oder ein Teil der Materialstärke des Werkstoffs 1 sein.

Die Figur 2 zeigt in einem Längsschnitt durch eine erfindungsgemäße Vorrichtung die Durchführung eines abgewandelten Beispiels eines erfindungsgemäßen Verfahrens, bei dem ein stab-, rundstab-, draht-, bolzen- oder rohrförmiger Werkstoff 1 als Ausgangshalbzeug bearbeitet wird, und zwar ein Rohr mit Außenkühlung. Als Wärmesenke wird hier eine das Ausgangshalbzeug umgreifende Spanneinrichtung 7, z.B. eine Spannzange oder ein Spannfutter, aus einem hoch wärmeleitfähigen Material verwendet, in die das Ausgangshalbzeug eingespannt wird. Entsprechend könnte auch ein Rundstab in der Spanneinrichtung 7 gefasst und über seine Mantelfläche mit der Strahlung 2 bearbeitet werden. Um eine hohe Kühlleistung zu erzielen, ist die Spanneinrichtung 7 formschlüssig zum Ausgangshalbzeug ausgebildet und wird über eine Segmentierung spaltfrei an das Ausgangshalbzeug angepresst.

Die Spanneinrichtung 7 wird mittels einer Kühlflüssigkeit gekühlt, die durch in der Spanneinrichtung angebrachte Kühlkanäle 8 fließt. Um eine möglichst gute Kühlung der Schmelzkapillare 3 in dem Werkstoff 1 zu erzielen, liegt der Fokus 6 der Strahlung 2 auf dem Mantel des Ausgangshalbzeugs unmittelbar neben der Spanneinrichtung 7, sodass die Bearbeitung, d.h. die Umschmelzung, des Werkstoffs 1 unmittelbar am Übergang des Werkstoffs 1 zu der gekühlten Spanneinrichtung 7 erfolgt.

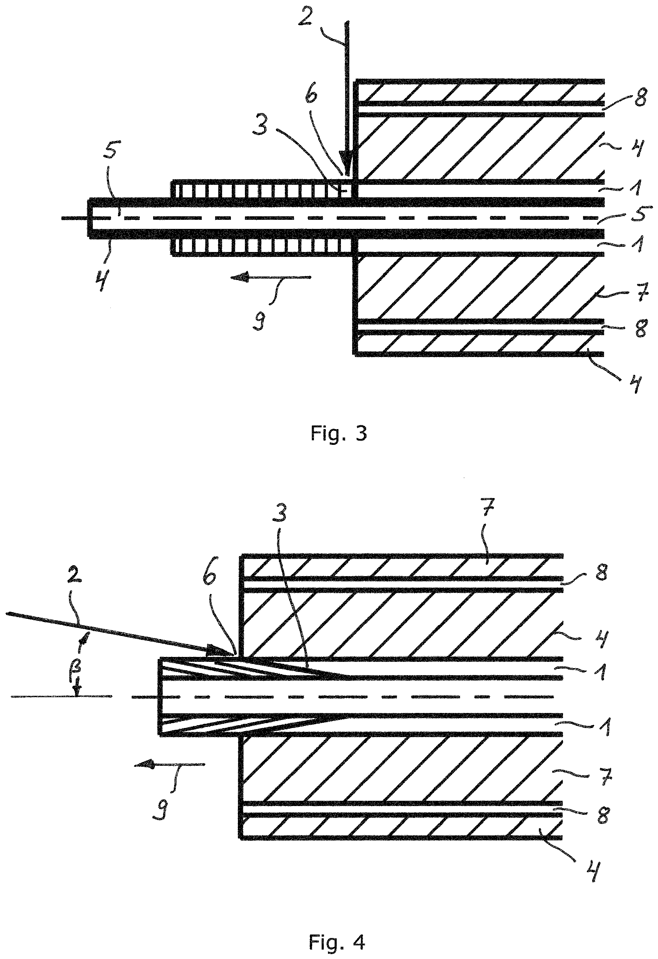

Die Figur 3 zeigt eine Kombination der Ausführungsformen von Figur 1 und 2, d.h. einen rohrförmigen Werkstoff 1, der sowohl mit einer Innenkühlung gemäß Figur 1 als auch einer Außenkühlung gemäß Figur 2 gekühlt wird, um eine besonders hohe Abkühlrate zu erzielen. Die Kombination einer inneren Wärmesenke 4 mit einer äußeren Wärmesenke 4 kann auch bei besonders großen Durchmessern oder Wandstärken des Werkstoffs 1 vorteilhaft sein. Beim Umschmelzen rohrförmiger Körper kann über eine innenliegende Wärmesenke in Form eines dicht anliegenden Innenrohres oder Innenstabes zusätzlich zu der Spanneinrichtung Wärme aus dem bearbeiteten Werkstoff 1 abgeführt werden.

Bei den Ausführungsbeispielen der Figuren 2 und 3 wird das Ausgangshalbzeug während der Bearbeitung mit der Strahlung 2 in axialer Richtung des Ausgangshalbzeugs, d.h. in einer Vorschubrichtung 9, aus der Spanneinrichtung 7 herausgezogen oder herausgeschoben. Die Spanneinrichtung 7 ist hierzu entsprechend ausgebildet. Ferner wird gemäß einer bevorzugten Ausführungsform das Ausgangshalbzeug während der Bearbeitung mit der Strahlung 2 um seine Längsachse gedreht und die Spanneinrichtung hierzu entsprechend ausgebildet, damit der Fokus 3 der Strahlung 2 den Mantel des Werkstoffs 1 überstreichen kann. Der Werkstoff tritt also schraubenförmig aus der Spanneinrichtung 7 heraus und wird dabei umgeschmolzen.

Durch die rotatorische Bewegung des Ausgangshalbzeugs und seinen gleichzeitigen axialen Vorschub aus der Spanneinrichtung 7 kann, wie auch bei einer Ausführungsform gemäß Figur 1, das Werkstoffvolumen durch eine rotatorisch erzeugte Spiralbahn des Fokus 6 auf dem Werkstoff 1 oder durch eine überlappende Aneinanderreihung axial verlaufender Bahnen umgeschmolzen werden. Zur Steigerung der Abkühlgeschwindigkeit können in zeitlich bzw. örtlich versetzter Abfolge Spiralbahnen aneinandergereiht werden. Eine weitere Erhöhung der Abkühlrate kann dabei durch ein nichtüberlappendes Umschmelzen in mehreren Spiralen erfolgen, die in einem zeitlichen Versatz nach einer gewissen thermischen Abklingzeit aufeinanderfolgen. Dies kann sowohl nach Fertigstellung der ersten Spirale in einem weiteren Durchgang als auch durch Strahlsplitting mit mehreren Schmelzkapillaren 3 ausgeführt werden.

Bei den Ausführungsbeispielen der Figuren 1 bis 3 beträgt der Einstrahlwinkel β der Strahlung 2 auf das Ausgangshalbzeug etwa 90°, bezogen auf die Längsachse des Ausgangshalbzeugs. Eine Abwandlung hierzu zeigt die Figur 4, die im Übrigen der Figur 2 entspricht. In Figur 4 beträgt der Einstrahlwinkel β der Strahlung 2 auf das Ausgangshalbzeug etwa 10°, bezogen auf die axiale Richtung, in der das Ausgangshalbzeug aus der Spanneinrichtung 7 herausragt. Allgemein kann der Einstrahlwinkel β zwischen 0° und 90° betragen. Je kleiner der Einstrahlwinkel β ist, desto mehr begünstigt dies die Erzielung einer höheren Abkühlrate in dem Werkstoff 1 durch die Wärmesenke 4, weil die von der Strahlung 2 in dem Werkstoff 1 ausgebildete Schmelzkapillare 3 bis unter die Spanneinrichtung 7 in die Spanneinrichtung 7 hineinragt und somit näher an die Wärmesenke 4 heranreicht.

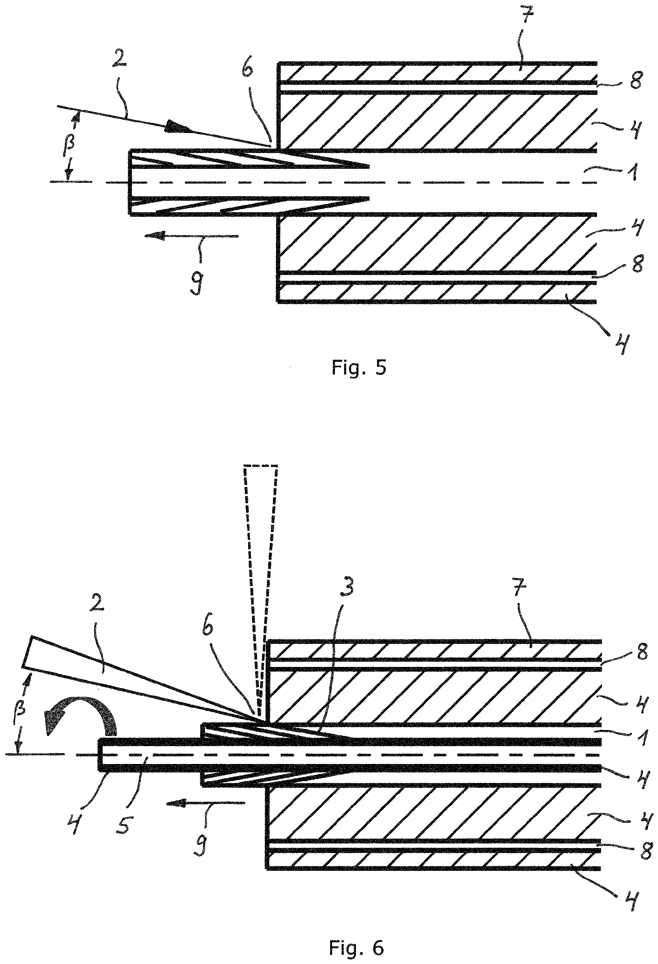

Die Figur 5 zeigt eine der Figur 4 entsprechende Ausführungsform, wobei in Abwandlung zu Figur 4 der bearbeitete Werkstoff 1 kein Rohr, sondern ein Stab ist. Der Stab wird unter Rotation um seine Längsachse aus der Spanneinrichtung 7 herausgeschoben. Der bereits umgeschmolzene Bereich ist hierbei gestrichelt gezeichnet. Es verbleibt ein nicht umgeschmolzener Kernbereich in dem Stab, der später abgetrennt werden kann.

Die Figur 6 zeigt eine der Figur 5 entsprechende Ausführungsform, wobei in Abwandlung zu Figur 5 der bearbeitete Werkstoff 1 kein Stab, sondern ein Rohr ist, das zusätzlich eine Innenkühlung gemäß Figur 3 aufweist. Das Rohr wird unter Rotation um seine Längsachse aus der Spanneinrichtung 7 herausgeschoben. Der bereits umgeschmolzene Bereich ist hierbei gestrichelt gezeichnet. In Figur 6 ist nicht nur der Einstrahlwinkel β von 10° dargestellt, sondern gestrichelt auch ein Einstrahlwinkel von 90°.

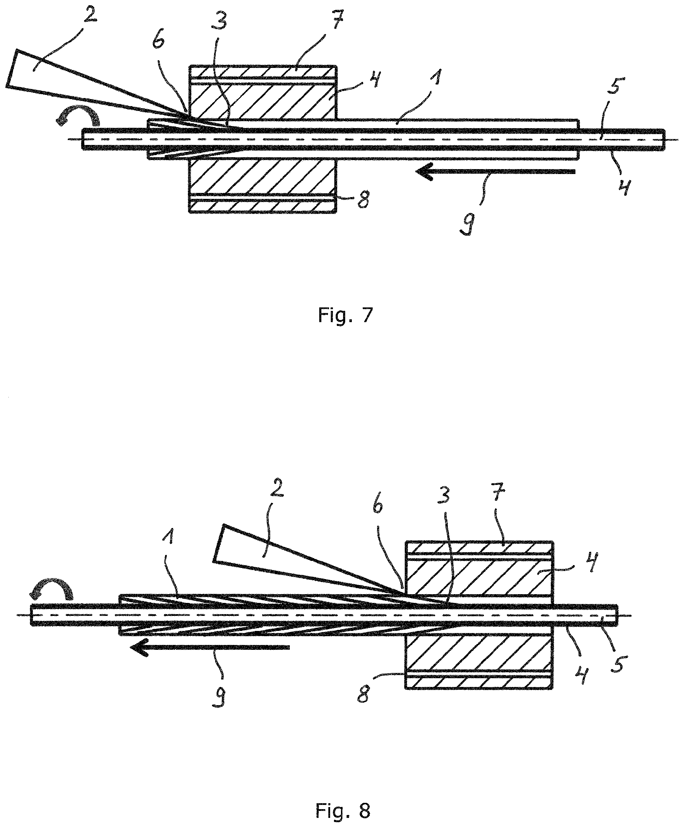

Die Figur 7 zeigt einen längeren Schnitt zu Figur 6 gegen Beginn der Bearbeitung und die Figur 8 einen längeren Schnitt zu Figur 6 gegen Ende der Bearbeitung des Werkstoffs 1 mit der Strahlung. Man erkennt hier gut, wie der rohrförmige Werkstoff 1 in einer Vorschubrichtung 9 durch die Spanneinrichtung 7 geschoben wird, während er eine Rotation durchführt und dabei mittels der Strahlung 2 auf seiner Mantelfläche umgeschmolzen wird, wobei er durch die in Kühlkanälen 8 von einer Kühlflüssigkeit 5 durchströmte Spanneinrichtung 7 und das von einer Kühlflüssigkeit 5 durchströmte Innenrohr gekühlt wird.

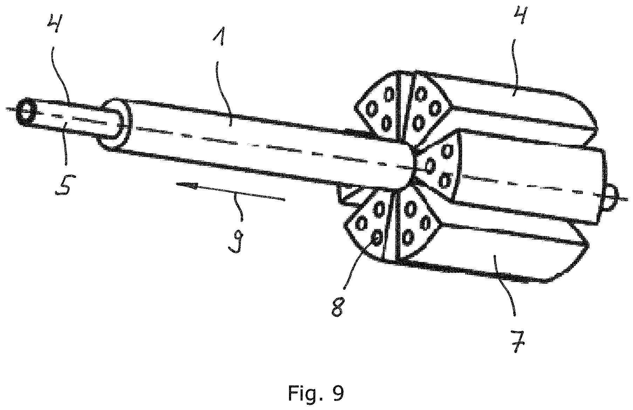

Die Figur 9 zeigt eine perspektivische Ansicht der Spanneinrichtung 7 von Figur 8, in der besonders gut die in die Spanneinrichtung 7 eingebrachten Kühlkanäle 8 für die Kühlflüssigkeit 5 und die Segmentierung der Spanneinrichtung 7, die ein spaltfreies Andrücken an den Mantel des Werkstoffs 1 ermöglicht, zu erkennen sind.

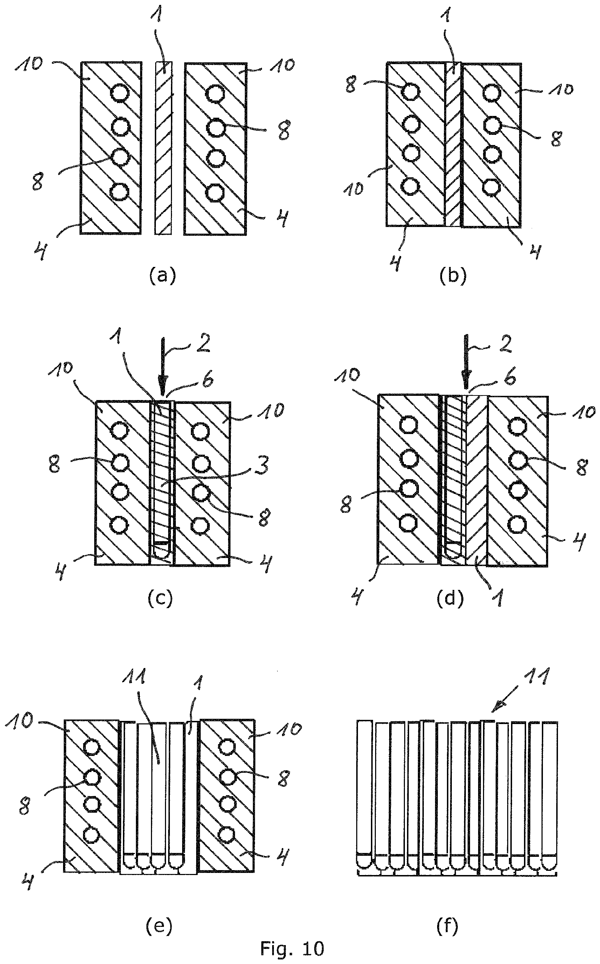

Die Figur 10 veranschaulicht ein erfindungsgemäßes Verfahren, bei dem ein platten- oder bandförmiger Werkstoff 1 als Ausgangshalbzeug bearbeitet wird, wobei als Wärmesenke 4 gegenüberliegende Klemmplatten 10 aus einem hoch wärmeleitfähigen Material einer Halteeinrichtung verwendet werden, zwischen denen das Ausgangshalbzeug unter Druck eingespannt oder hindurchgeführt wird, und das Ausgangshalbzeug durch eine zwischen den Klemmplatten 10 ausgebildete Schmelzkapillare 3, die in Längsrichtung des Ausgangshalbzeugs durch das Ausgangshalbzeug geführt wird, bearbeitet wird. Die Schmelzkapillare 3 kann zusätzlich auch quer zur Längsrichtung des Ausgangshalbzeugs durch das Ausgangshalbzeug geführt werden. Bevorzugt sind die Klemmplatten 10 senkrecht angeordnet und der Strahl 2 kommt von oben. Die Tiefe der Schmelzkapillare 3 entspricht vorzugsweise in etwa der Höhe der Klemmplatten 10, damit das Ausgangshalbzeug über seinen gesamten Querschnitt bearbeitet werden kann.

In Figur 10 sind in einem Querschnitt durch eine erfindungsgemäße Vorrichtung aufeinanderfolgende Verfahrensschritte (a) bis (f) dargestellt. In Schritt (a) wird das umzuschmelzende Ausgangshalbzeug, z.B. eine Tafel/Platte oder ein Band, zwischen zwei sich gegenüberstehenden Klemmplatten 10, die mit von einer Kühlflüssigkeit durchströmten Kühlkanälen 8 versehen sind, eingelegt, und in Schritt (b) zwischen den an das Ausgangshalbzeug angesetzten Klemmplatten 10 unter Druck eingespannt. Danach erfolgt in Schritt (c) das Umschmelzen mit einer fokussierten, energiereichen Strahlung 2, die auf die seitliche Stirnfläche des Ausgangshalbzeugs wirkt und in diesem eine Schmelzkapillare 3 ausbildet. Aufgrund der guten Kühlung durch die Umschließung der Schmelzkapillare 3 mit Kühlmaterial, nämlich dem bearbeiteten Werkstoff 1 selbst, und der guten Kühlung des Werkstoffs 1 mittels der als Wärmesenke 4 dienenden gekühlten Klemmplatten 10, wird der Werkstoff 1 schroff abgekühlt. Es ist aber ebenso möglich, das Ausgangshalbzeug nicht fest als Platte zwischen den Klemmplatten 10 einzuspannen, sondern als Band in einem kontinuierlichen Prozess in einer Vorschubrichtung, die bevorzugt quer zur Einfallsrichtung der Strahlung 2 liegt, zwischen den an dem Band anliegenden Klemmplatten 10 hindurchzuführen und dabei umzuschmelzen.

Das Ausgangshalbzeug wird in einer Bahnkurve des Fokus 6 der Strahlung 2 auf dem Ausgangshalbzeug oder, insbesondere bei größerer Dicke des Ausgangshalbzeugs, in mehreren Bahnkurven des Fokus 6 mittels einer Schmelzkapillare 3 hochkant umgeschmolzen. Wenn nur eine einzige, geradlinige Bahnkurve des Fokus 6 verwendet wird, ist die Dicke des Werkstoffs 1 nur geringfügig größer als der Durchmesser der Schmelzkapillare 3. Bei Verwendung aufeinanderfolgender Bahnkurven des Fokus 6 wird die Schmelzkapillare 3 wiederholt durch das Ausgangshalbzeug geführt wird, bis der gewünschte Teil des Ausgangshalbzeugs bearbeitet ist. Das durch die Strahlung 2 erzeugte Keyhole durchdringt das Halbzeug in Form einer Schmelzkapillare 3, die beispielsweise in Längsrichtung durch das Halbzeug geführt wird. Dieser Vorgang wird so oft mit einer versetzen Bahnkurve des Fokus 6 wiederholt, bis nahezu das gesamte Halbzeug umgeschmolzen ist. Die Nahtüberdeckung von einer Bahnkurve zur nächsten kann hierbei beispielsweise zwischen 10 % und 90 % der Breite einer Bahn, d.h. des Durchmessers des Fokus 6 der Strahlung 2, betragen. Zwischen den einzelnen Umschmelzschritten kann erforderlichenfalls eine Pause zur vollständigen Wärmeableitung in die Wärmesenke 4 eingefügt werden. Die Verfahrgeschwindigkeit des Fokus 6 kann je nach angestrebter Abschreckrate beispielsweise zwischen 0,1 m/min und 20 m/min variiert werden. Hierbei werden Abkühlraten bis über 10⁴ K/sec erreicht.

Nach dem Schritt (c) kann das Ausgangshalbzeug fertig bearbeitet sein. Wenn die Dicke des bearbeiteten Werkstoffs 1 ausreicht, sind die weiteren Schritte (d) bis (f) nicht erforderlich. Stattdessen kann in einem auf den Schritt (c) folgenden, nicht dargestellten Arbeitsgang das so erzeugte massive umgeschmolzene Halbzeug überfräst oder überschliffen werden, um den nicht umgeschmolzenen Bereich zu entfernen.

Wenn dagegen die Dicke des bearbeiteten Werkstoffs 1 aus Schritt (c) nicht ausreicht, können sich die Schritte (d) bis (f) anschließen, in denen die Schritte (a) bis (c) ein oder mehrfach wiederholt werden, um schrittweise ein beliebig dickes, massives Halbzeug mit durchgängig unterkühltem Gefügezustand herzustellen. In Schritt (d) wird die aus Schritt (c) erhaltene umgeschmolzene Platte mit einer weiteren, daran angelegten Platte aus einem noch nicht umgeschmolzenen Werkstoff 1 zwischen die Klemmplatten 10 eingespannt und durch die Strahlung 2 umgeschmolzen. Die Breite der Überlappung des dabei erneut umgeschmolzenen Bereichs in der bereits umgeschmolzenen Platte aus der vorausgegangenen Bearbeitung kann beispielsweise zwischen 10 % und 90 % der Breite der neu hinzugefügten Platte, bevorzugt zwischen 1/3 und 2/3 der Breite der neu hinzugefügten Platte betragen. Dabei werden die Breite der Überlappung und die Dicke der Platte in derselben Richtung, nämlich quer zur Richtung der Strahlung 2, betrachtet. Es wird also nach dem Bearbeiten eines ersten Ausgangshalbzeuges ein zweites, zu dem ersten Ausgangshalbzeug gleichartiges Ausgangshalbzeug aus demselben Werkstoff 1 neben das erste, bereits bearbeitete Halbzeug zwischen den Klemmplatten 10 eingespannt und das so gebildete schichtförmige Ausgangshalbzeug mit einer Schmelzkapillare 3 bearbeitet. Optional wird dieser Vorgang ein- oder mehrfach wiederholt, bis ein bearbeiteter Werkstoff 1 gewünschter Dicke hergestellt ist. Beim Wiederholen wird jeweils eine letzte bearbeitete Platte als neue erste Platte verwendet und eine weitere Platte daneben eingelegt und damit umgeschmolzen.

Der Schritt (d) kann beliebig oft wiederholt werden. In Schritt (e) ist ein Zwischenschritt dargestellt, bei dem auf einen zuvor aus vier nacheinander miteinander verbundenen Platten gebildeten Block 11 eine fünfte Platte aus einem noch nicht umgeschmolzenen Werkstoff aufgelegt und mit dem bereits umgeschmolzenen Block 11 überlappend umgeschmolzen wird. Am Ende wird so nach beliebig vielen Wiederholungen des Schrittes (d) ein Block 11 in der gewünschten Dicke erhalten, wie er in Schritt (f) veranschaulicht ist. Auf diese Weise kann durch schrittweises Umschmelzen ein beliebig dickes, massives Halbzeug aufgebaut werden, der bei hoher Unterkühlung erstarrt ist. Die nicht umgeschmolzene Randschale um den Körper des Halbzeugs kann durch umseitiges Überfräsen entfernt und das so hergestellte Halbzeug in dieser Form verwendet oder in konventionellen Umformprozessen zum endgültigen Produkt weiterverarbeitet werden.

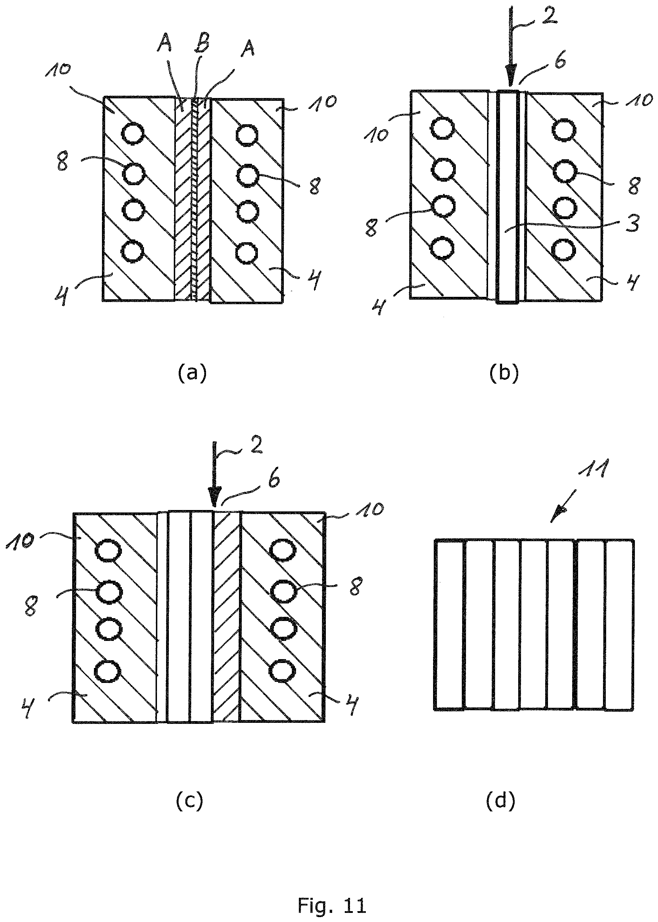

Die Figur 11 zeigt eine Abwandlung des Verfahrens von Figur 10 bei einer Platte, bei dem ein Ausgangshalbzeug zwischen den Klemmplatten 10 eingespannt und bearbeitet wird, das aus einer Schichtung nebeneinander angeordneter Ausgangshalbzeuge aus unterschiedlichen Werkstoffen besteht. Das Verfahren nach Figur 10 kann zur Herstellung neuartiger Legierungen dahingehend modifiziert werden, dass neben einer Gefügeoptimierung durch Umschmelzen gleichzeitig ein Umschmelzlegieren mit weiteren Elementen erfolgt, verbunden mit rascher Erstarrung und hoher Unterkühlung der Schmelze.

Hierzu werden mehrere dünne Bleche aus unterschiedlichen reinen Metallen, Metalllegierungen oder Werkstoffverbunden nebeneinander geschichtet angeordnet und mittels einer Schmelzkapillare 3 miteinander verbunden und hierbei legiert. In dem Beispiel von Schritt (a) wird zwischen zwei gleichartige, plattenförmige Ausgangswerkstoffe A eine Zwischenfolie aus einem anderen Ausgangswerkstoff B eingelegt und in Schritt (b) mittels einer Schmelzkapillare 3 gemeinsam umgeschmolzen und hierbei zu einem geänderten Werkstoff legiert. Für eine homogene Durchmischung der Komponenten kann ein mehrmaliges Überschmelzen bzw. eine schräge Einstrahlung unter wechselnden Winkeln von Vorteil sein. Das in Figur 10 veranschaulichte Verfahren lässt sich somit gemäß Figur 11 zum Herstellen von Legierungen modifizieren, indem im Ausgangszustand unterschiedliche Werkstoffe gegeneinander geschichtet werden. Über die Verwendung unterschiedlicher Ausgangsdicken je Werkstoff lassen sich so Legierungen und Gefügezustände einstellen, die in konventionellen Schmelzverfahren nicht herstellbar sind. Auf diese Weise ist es möglich, bisher nicht herstellbare metallische Legierungen in einer massiven Halbzeugform herzustellen.

In Figur 11 ist in Schritt (c) veranschaulicht, wie analog zu Figur 10 der Vorgang wiederholt werden kann, bis ein Block 11 eines dicken, massiven Halbzeugs der Legierung in gewünschter, beliebiger Dicke schichtweise aufgebaut ist, das in Schritt (d) veranschaulicht ist. Der schrittweise, schichtförmige Aufbau ermöglicht eine sehr hohe Abkühlrate auch über große Bauteilquerschnitte.

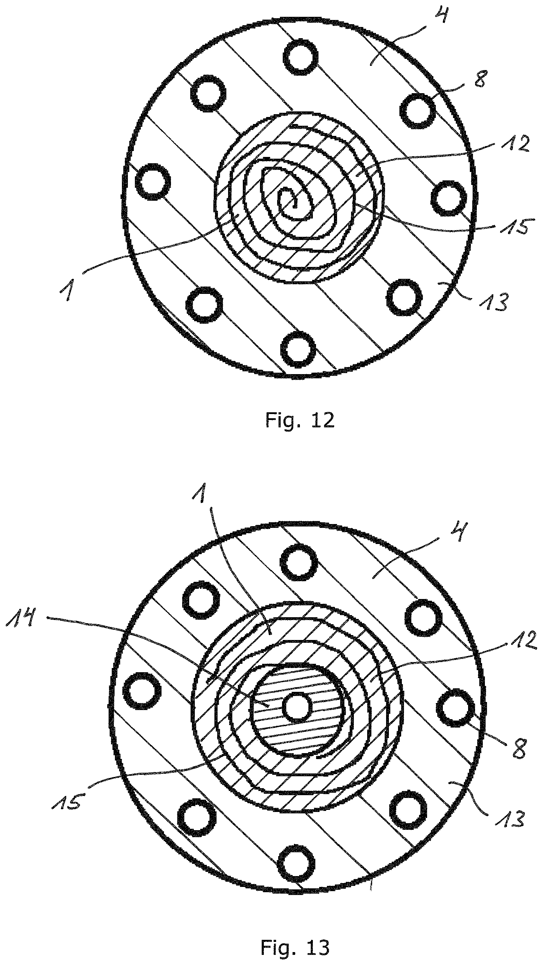

Die Figuren 12 und 13 veranschaulichen in stirnseitigen Aufsichten auf entsprechende erfindungsgemäße Vorrichtungen erfindungsgemäße Verfahren, bei denen ein bolzenförmiger Werkstoff als Ausgangshalbzeug bearbeitet wird, wobei als Wärmesenke 4 ein den Bolzen auf seiner Mantelfläche umschließender Kühlmantel 13 aus einem hoch wärmeleitfähigen Material verwendet wird und der Fokus der Strahlung über die Stirnseite des Ausgangshalbzeugs geführt wird. Die Figur 12 zeigt das Umschmelzen eines Bolzens 12 mittels einer durch fokussierte Strahlung erzeugten Schmelzkapillare mit Außenkühlung und die Figur 13 das Umschmelzen eines gelochten Bolzens 12 mit gleichzeitiger Außen- und Innenkühlung. Die Bolzenhöhe kann beispielsweise bis 400 mm betragen, der Durchmesser 5 mm bis 200 mm. Der umgeschmolzene Bolzen 12 kann durch anschließende Umformung zu einem Produkt oder Halbzeug verarbeitet werden, z.B. durch Strangpressen, Schmieden und weitere spanlose Umformprozesse wie Walzen und Ziehen. Der umgeschmolzene Bolzen 12 kann beispielsweise als Ausgangshalbzeug für eine anschließende Strangpressumformung einer Drahtherstellung verwendet werden.

Unter einem Bolzen 12 oder bolzenförmigen Werkstoff wird dabei eine zylinderförmige Form eines Ausgangswerkstoffs verstanden. Als bolzenförmiger Werkstoff kann ein Ausgangswerkstoff verwendet werden, der aus einem massiven Werkstoff, aus einem Wickelkörper aus aufgewickelten Bändern oder Folien oder aus zusammengesetzten Schalen von Rohrhülsen gebildet ist. Der bolzenförmige Werkstoff kann vollvolumig (Figur 12) oder mit einer axialen Lochung (Figur 13) ausgebildet sein. Wenn eine besonders hohe Abkühlrate erzielt werden soll, kann ein bolzenförmiger Werkstoff verwendet werden, der als Wärmesenke einen gekühlten Dorn 14 aufweist (Figur 13), d.h. eine Wärmesenke 4 in Form eines Innenrohres aus einem gut wärmeleitenden Material, das mittels einer Kühlflüssigkeit gekühlt, vorzugsweise durchströmt wird.

Zur Erzielung einer wirksamen Ableitung der Schmelzwärme aus dem Werkstoff 1 ist das bolzenförmige Ausgangshalbzeug von einem Kühlmantel 13 aus gut wärmeleitendem Material, wie beispielsweise Kupfer, umgeben bzw. umschlossen, der als Wärmesenke 4 dient. Um eine gute Wärmeabfuhr von dem Werkstoff 1 an den Kühlmantel 13 zu erzielen, ist der zylinderförmige Bolzen 12 in einen Kühlmantel 13 aus Kupfer eingebettet, beispielsweise durch Einpressen des Bolzens 12 in den Kühlmantel 13 oder durch Umgießen des Bolzens mit dem Kühlmantel 13. Der Kühlmantel 13 kann durch Umgießen des umzuschmelzenden Werkstoffs 1 erzeugt werden, wobei dieser infolge der Erstarrungsschrumpfung unter hohen Zugspannungen spaltfrei an dem Kühlmantel 12 anliegt. In den Kühlmantel 13 können Kühlkanäle 8 zum Durchleiten einer Kühlflüssigkeit eingebracht werden. Die Kühlkanäle 8 können aber auch dadurch erzeugt werden, dass eine vorgeformte rohrförmige Kühlschlange mit dem Material des Kühlmantels 13 umgossen wird.

Die Einstrahlrichtung der fokussierten Strahlung ist in axialer Richtung des Bolzens 12, d.h. rechtwinklig zur Stirnseite des Bolzens 12. Der Fokus der Strahlung wird beispielsweise in kreis- oder spiralförmigen Bahnkurven 15 über die Stirnseite des Bolzens 12 geführt, wodurch der Bolzen 12 durch die darin ausgebildete wandernde Schmelzkapillare umgeschmolzen und über die gekühlte Wärmesenke schnell abgekühlt wird. Die Strahlung kann kontinuierlich wirken oder durch Abkühlpausen unterbrochen werden.

Das in den Figuren 12 und 13 veranschaulichte Verfahren kann nicht nur zum Umschmelzen eines Werkstoffs 1, sondern auch zum Bilden von Legierungen aus Ausgangswerkstoffen verwendet werden. Hierzu wird ein Bolzen 12 aus verschiedenen, geschichteten Werkstoffen zusammengesetzt, die überlappend umgeschmolzen und dabei legiert werden. Ein solcher zylinderförmiger, zusammengesetzter Bolzen 12 kann beispielsweise aus ineinandergefügten Schalen von Rohren oder Rohrhülsen unterschiedlicher Metalle oder Metalllegierungen oder zur besseren Homogenisierung auch durch einen Wickelkörper aus geschichteten Metallfolien zusammengesetzt und dann umgeschmolzen und legiert werden. Durch Wickeln auf einen gekühlten Kupferdorn 14 kann zusätzlich Schmelzwärme nach innen abgeführt werden.

### Bezugszeichenliste

- 1: Werkstoff
- 2: fokussierte Strahlung
- 3: Schmelzkapillare
- 4: Wärmesenke
- 5: Kühlflüssigkeit
- 6: Fokus
- 7: Spanneinrichtung
- 8: Kühlkanal
- 9: Vorschubrichtung
- 10: Klemmplatte
- 11: Block
- 12: Bolzen
- 13: Kühlmantel
- 14: Dorn
- 15: Bahnkurve
- β: Einstrahlwinkel
- A: Werkstoff A
- B: Werkstoff B

## Patentansprüche

1. Verfahren zum Herstellen metallischer Halbzeuge durch Umschmelzen und/oder Umschmelzlegieren metallischer Werkstoffe (1), wobei die Erstarrung der Schmelze mittels einer Kühleinrichtung mit einer hohen Abkühlrate erfolgt,
**dadurch gekennzeichnet, dass**
der Werkstoff (1) mittels energiereicher, fokussierter Strahlung (2) in einer Schmelzkapillare (3) in dem Werkstoffvolumen selektiv lokal geschmolzen wird,
der Wärmeentzug aus der Schmelzkapillare (3) über das an die Schmelzkapillare (3) angrenzende, nicht umgeschmolzene, kalte Werkstoffvolumen durchgeführt wird,
gleichzeitig mit dem Schmelzen des Werkstoffs (1) mittels der fokussierten Strahlung (2) zum Abführen der von der Schmelzkapillare (3) an das Werkstoffvolumen abgegebenen Wärme das Werkstoffvolumen mittels mindestens einer Wärmesenke (4) gekühlt wird,
wobei die Wärmesenke (4) an zumindest einen Teil einer wenigstens einen Fläche des Werkstoffvolumens gut wärmeleitend angekoppelt ist und die Wärmesenke (4) mittels einer Kühlflüssigkeit (5) gekühlt wird,
die Wärmesenke (4) an einer Stelle des Werkstoffvolumens gut wärmeleitend an das Werkstoffvolumen angekoppelt ist, die nahe zu dem Fokus (6) der fokussierten Strahlung (2) auf dem Werkstoff (1) bzw. zu der Schmelzkapillare (3) in dem Werkstoff (1) liegt, und zum Schmelzen des die Schmelzkapillare (3) umgebenden Werkstoffvolumens des Werkstoffs (1) der Fokus (6) der fokussierten Strahlung (2) über den Werkstoff (1) bzw. die Schmelzkapillare (3) durch den Werkstoff (1) bewegt wird, wobei der Fokus (6) der energiereichen, fokussierten Strahlung (2) und der bestrahlte Werkstoff (1) derart relativ zueinander bewegt werden, dass die gewünschte Fläche von dem Fokus (6) überstrichen wird.

2. Verfahren nach Anspruch 1, **dadurch gekennzeichnet, dass** als energiereiche, fokussierte Strahlung (2) ein Elektronenstrahl, Laserstrahl, Ionenstrahl oder Plasmastrahl verwendet wird.

3. Verfahren nach einem der vorhergehenden Ansprüche, **dadurch gekennzeichnet, dass** ein platten-, band-, stab-, rundstab-, draht-, bolzen- oder rohrförmiger Werkstoff (1) als Ausgangshalbzeug bearbeitet, d.h. umgeschmolzen und/oder umschmelzlegiert wird.

4. Verfahren nach einem der vorhergehenden Ansprüche, **dadurch gekennzeichnet, dass** ein Werkstoff (1) aus Nitinol bearbeitet, d.h. umgeschmolzen und/oder umschmelzlegiert wird.

5. Verfahren nach einem der vorhergehenden Ansprüche, **dadurch gekennzeichnet, dass** eine Wärmesenke (4) verwendet wird, die allein als Gas- oder Flüssigkeitskühlung ausgebildet ist.

6. Verfahren nach einem der Ansprüche 1 bis 4, **dadurch gekennzeichnet, dass** eine Wärmesenke (4) verwendet wird, die aus einem massiven, gut wärmeleitenden Material besteht, insbesondere aus Kupfer oder Silber.

7. Verfahren nach Anspruch 6, **dadurch gekennzeichnet, dass** eine Wärmesenke (4) verwendet wird, die als separate, externe Halte- oder Spanneinrichtung (7) ausgebildet ist, die die Oberfläche des bearbeiteten Werkstoffs (1) von außen kontaktiert.

8. Verfahren nach Anspruch 6 oder 7, **dadurch gekennzeichnet, dass** eine Wärmesenke (4) verwendet wird, die an den bearbeiteten Werkstoff (1) angeformt ist.

9. Verfahren nach Anspruch 8, **dadurch gekennzeichnet, dass** als an den bearbeiteten Werkstoff (1) angeformte Wärmesenke (4) ein Kühlmantel (13) aus einem Rohr oder ein Kühlkern aus einem Kern oder Rohr verwendet wird.

10. Verfahren nach einem der vorhergehenden Ansprüche, **dadurch gekennzeichnet, dass** ein stab-, rundstab-, draht-, bolzen- oder rohrförmiger Werkstoff (1) als Ausgangshalbzeug bearbeitet wird.

11. Verfahren nach Anspruch 10, **dadurch gekennzeichnet, dass** ein rohrförmiger Werkstoff (1) als Ausgangshalbzeug bearbeitet wird, wobei als Wärmesenke (4) für den rohrförmigen Werkstoff (1) ein aus einem hoch wärmeleitfähigen Material gebildetes Rohr verwendet wird, das von einer Kühlflüssigkeit (5) durchströmt wird.

12. Verfahren nach Anspruch 10, **dadurch gekennzeichnet, dass** als Wärmesenke (4) eine das Ausgangshalbzeug umgreifende Spanneinrichtung (7) aus einem hoch wärmeleitfähigen Material verwendet wird, in die das Ausgangshalbzeug eingespannt wird.

13. Verfahren nach Anspruch 12, **dadurch gekennzeichnet, dass** das Ausgangshalbzeug während der Bearbeitung mit der Strahlung (2) in axialer Richtung des Ausgangshalbzeugs aus der Spanneinrichtung (7) herausgezogen oder herausgeschoben wird.

14. Verfahren nach Anspruch 12 oder 13, **dadurch gekennzeichnet, dass** das Ausgangshalbzeug während der Bearbeitung mit der Strahlung (2) um seine Längsachse gedreht wird.

15. Verfahren nach einem der Ansprüche 1 bis 9, **dadurch gekennzeichnet, dass** ein platten- oder bandförmiger Werkstoff (1) als Ausgangshalbzeug bearbeitet wird, wobei als Wärmesenke (4) gegenüberliegende Klemmplatten (10) aus einem hoch wärmeleitfähigen Material einer Halteeinrichtung verwendet werden, zwischen denen das Ausgangshalbzeug unter Druck eingespannt oder hindurchgeführt wird, und das Ausgangshalbzeug durch eine zwischen den Klemmplatten (10) ausgebildete Schmelzkapillare (3), die in Längsrichtung des Ausgangshalbzeugs durch das Ausgangshalbzeug geführt wird, bearbeitet wird.

16. Verfahren nach Anspruch 15, **dadurch gekennzeichnet, dass** nach dem Bearbeiten eines ersten Ausgangshalbzeuges ein zweites, zu dem ersten Ausgangshalbzeug gleichartiges Ausgangshalbzeug aus demselben Werkstoff (1) neben das erste, bereits bearbeitete Halbzeug zwischen den Klemmplatten (10) eingespannt und das so gebildete schichtförmige Ausgangshalbzeug mit einer Schmelzkapillare (3) bearbeitet wird.

17. Verfahren nach Anspruch 15, **dadurch gekennzeichnet, dass** ein Ausgangshalbzeug zwischen den Klemmplatten (10) eingespannt und bearbeitet wird, das aus einer Schichtung nebeneinander angeordneter Ausgangshalbzeuge aus unterschiedlichen Werkstoffen besteht.

18. Verfahren nach einem der Ansprüche 1 bis 9, **dadurch gekennzeichnet, dass** ein bolzenförmiger Werkstoff (1) als Ausgangshalbzeug bearbeitet wird, wobei als Wärmesenke (4) ein den Bolzen (12) auf seiner Mantelfläche umschließender Kühlmantel (13) aus einem hoch wärmeleitfähigen Material verwendet wird und der Fokus (6) der Strahlung (2) über die Stirnseite des Ausgangshalbzeugs geführt wird.

19. Vorrichtung zum Herstellen metallischer Halbzeuge durch Umschmelzen und/oder Umschmelzlegieren metallischer Werkstoffe(1), wobei die Erstarrung der Schmelze mittels einer Kühleinrichtung mit einer hohen Abkühlrate erfolgt,
**dadurch gekennzeichnet, dass**
sie eine Strahleinrichtung zum Erzeugen energiereicher, fokussierter Strahlung (2) aufweist, die zum selektiven lokalen Schmelzen des Werkstoffs (1) in einer Schmelzkapillare (3) in dem Werkstoffvolumen ausgebildet ist,
wobei der Wärmeentzug aus der Schmelzkapillare (3) über das an die Schmelzkapillare (3) angrenzende, nicht umgeschmolzene, kalte Werkstoffvolumen durchgeführt wird,
eine Kühleinrichtung zum Kühlen mindestens einer Wärmesenke (4) aufweist, die zum Abführen der von der Schmelzkapillare (3) an das Werkstoffvolumen abgegebenen Wärme durch Kühlen des Werkstoffvolumens mittels der Wärmesenke (4) ausgebildet ist, während gleichzeitig der Werkstoff (1) mittels der fokussierten Strahlung (2) geschmolzen wird,
wobei die Wärmesenke (4) an zumindest einen Teil einer wenigstens einen Fläche des Werkstoffvolumens gut wärmeleitend ankoppelbar ist und die Wärmesenke (4) mittels einer Kühlflüssigkeit (5) kühlbar ist,
die Wärmesenke (4) an einer Stelle des Werkstoffvolumens gut wärmeleitend an das Werkstoffvolumen ankoppelbar ist, die nahe zu dem Fokus (6) der fokussierten Strahlung (2) auf dem Werkstoff (1) bzw. zu der Schmelzkapillare (3) in dem Werkstoff (1) liegt, und
derart ausgebildet ist, dass zum Schmelzen des die Schmelzkapillare (3) umgebenden Werkstoffvolumens des Werkstoffs (1) der Fokus (6) der fokussierten Strahlung (2) über den Werkstoff (1) bzw. die Schmelzkapillare (3) durch den Werkstoff (1) bewegbar ist, wobei der Fokus (6) der energiereichen, fokussierten Strahlung (2) und der bestrahlte Werkstoff (1) derart relativ zueinander bewegbar sind, dass die gewünschte Fläche von dem Fokus (6) überstrichen wird.

## Claims

1. Method for producing metallic semi-finished products by means of remelting and/or remelt-alloying of metallic materials (1), wherein solidification of the melt is effected by means of a cooling device at a high cooling rate,
**characterized in that**
the material (1) is melted selectively locally in a melting capillary (3) in the material volume by means of high-energy, focused radiation (2),
dissipation of heat from the melting capillary (3) is effected via the cold, non-remelted material volume adjacent to the melting capillary (3),
simultaneously with the melting of the material (1) by means of the focused radiation (2) the material volume is cooled down by means of at least one heat sink (4) in order to dissipate the heat transferred from the melting capillary (3) to the material volume,
wherein the heat sink (4) is coupled to at least one part of at least one surface of the material volume in a well heat-conductive manner and the heat sink (4) is cooled by means of a cooling liquid (5),
the heat sink (4) is coupled to the material volume in a well heat-conductive manner at a point of the material volume, which is located close to the focus (6) of the focused radiation (2) on the material (1) or close to the melting capillary (3) in the material (1), respectively, and
for melting the material volume of the material (1) surrounding the melting capillary (3), the focus (6) of the focused radiation (2) is moved over the material (1) or the melting capillary (3) is moved through the material (1), respectively, wherein the focus (6) of the high-energy, focused radiation (2) and the radiated material (1) are moved relative to one another such that the desired area is swept over by the focus (6).

2. Method according to claim 1, **characterized in that** an electron beam, laser beam, ion beam or plasma beam is used as high-energy focused radiation (2).

3. Method according to any of the preceding claims, **characterized in that** a plate-, strip-, rod-, round rod-, wire-, bolt-, or tube-shaped material (1) is processed, i.e. remelted and/or remelt-alloyed, as initial semi-finished product.

4. Method according to any of the preceding claims, **characterized in that** a material (1) made of Nitinol is processed, i.e. remelted and/or remelt-alloyed.

5. Method according to any of the preceding claims, **characterized in that** a heat sink (4) is used which is configured as a gas cooling or a liquid cooling only.

6. Method according to any of claims 1-4, **characterized in that** a heat sink (4) is used which consists of a massive, well heat-conductive material, in particular of copper or silver.

7. Method according to claim 6, **characterized in that** a heat sink (4) is used which is configured as a separate, external holding or clamping device (7), which contacts the surface of the processed material (1) from outside.

8. Method according to claim 6 or 7, **characterized in that** a heat sink (4) is used which is formed to the processed material (1).

9. Method according to claim 8, **characterized in that** a cooling jacket (13) made of a pipe or a cooling core made of a core or a pipe is used as a heat sink (4) formed to the processed material (1).

10. Method according to any of the preceding claims, **characterized in that** a rod-, round rod-, wire-, bolt-, or tube-shaped material (1) is processed as initial semi-finished product.

11. Method according to claim 10, **characterized in that** a tube-shaped material (1) is processed as initial semi-finished product, wherein a pipe formed of a highly heat-conductive material, which is flown-through by a cooling liquid (5), is used as a heat sink (4) for the tube-shaped material (1).

12. Method according to claim 10, **characterized in that** a clamping device (7) made of a highly heat-conductive material and engaging around the initial semi-finished product is used as a heat sink (4), into which clamping device the initial semi-finished product is clamped.

13. Method according to claim 12, **characterized in that** the initial semi-finished product is pulled out or pushed out of the clamping device (7) in axial direction of the initial semi-finished product while being processed with the radiation (2).

14. Method according to claim 12 or 13, **characterized in that** the initial semi-finished product is rotated around its longitudinal axis while being processed with the radiation (2).

15. Method according to any of claims 1-9, **characterized in that** a plate- or strip-shaped material (1) is processed as initial semi-finished product, wherein opposed clamping plates (10) made of a highly heat-conductive material of a holding device are used as a heat sink (4), between which clamping plates (10) the initial semi-finished product is clamped-in or guided through under pressure, and the initial semi-finished product is processed by a melting capillary (3) formed between the clamping plates (10), which melting capillary (3) is moved through the initial semi-finished product in the longitudinal direction of the semi-finished product.

16. Method according to claim 15, **characterized in that** after processing of a first initial semi-finished product, a second same-type semi-finished product made of the same material (1) is clamped between the clamping plates next to the first, already-processed semi-finished product and the layer-type initial semi-finished product formed that way is processed with a melting capillary (3).

17. Method according to claim 15, **characterized in that** an initial semi-finished product is clamped between the clamping plates (10) and processed, which initial semi-finished product consists of an arrangement in layers of initial semi-finished products placed adjacent to one another made of different materials.

18. Method according to any of claims 1-9, **characterized in that** a bolt-shaped material (1) is processed as initial semi-finished product, wherein a cooling jacket (13) made of a highly heat-conductive material and enclosing the bolt (12) on its shell surface is used as a heat sink (4) and the focus (6) of the radiation (2) is moved over the face side of the initial semi-finished product.

19. Apparatus for producing metallic semi-finished products by means of remelting and/or remelt-alloying of metallic materials (1), wherein solidification of the melt is effected by means of a cooling device at a high cooling rate,
**characterized in that**
it comprises a radiation device for generating a high-energy, focused radiation (2) which is configured to selectively locally melt the material (1) in a melting capillary (3) in the material volume, wherein the dissipation of heat from the melting capillary (3) is effected via the non-remelted, cold material volume adjacent to the melting capillary (3),
it comprises a cooling device for cooling at least one heat sink (4), which is configured for dissipating the heat transferred from the melting capillary (3) to the material volume by cooling the material volume down by means of the heat sink (4), while at the same time the material (1) is melted by means of the focused radiation (2), wherein the heat sink (4) is adapted to be coupled to at least one part of at least one surface of the material volume in a well heat-conductive manner and the heat sink (4) is adapted to be cooled by means of a cooling liquid (5),
the heat sink (4) is adapted to be coupled in a well heat-conductive manner to the material volume at a point of the material volume which is located close to the focus (6) of the focused radiation (2) on the material (1) or close to the melting capillary (3) in the material (1), respectively,
and is configured such that for melting the material volume of the material (1) surrounding the melting capillary (3), the focus (6) of the focused radiation (2) can be moved over the material (1) or the melting capillary (3) can be moved through the material (1), respectively, wherein the focus (6) of the high-energy, focused radiation (2) and the radiated material (1) are moveable relative to one another such that the desired area is swept over by the focus (6).

## Revendications

1. Procédé pour produire des produits semi-finis métalliques au moyen de la refusion et/ou de l'alliage de refusion de matières métalliques (1), dans lequel la solidification de la matière fondue est réalisée au moyen d'un dispositif de refroidissement à une vitesse de refroidissement élevée;
**caractérisé en ce que**:
la matière (1) est fondue localement de façon sélective dans un capillaire de fusion (3) dans le volume de matière au moyen d'un rayonnement focalisé haute énergie (2);
la dissipation de la chaleur qui provient du capillaire de fusion (3) est réalisée via le volume de matière non refondu froid qui est adjacent au capillaire de fusion (3);
simultanément à la fusion de la matière (1) au moyen du rayonnement focalisé (2), le volume de matière est refroidi au moyen d'au moins un dissipateur thermique (4) afin de dissiper la chaleur qui est transférée depuis le capillaire de fusion (3) au volume de matière ; dans lequel:
le dissipateur thermique (4) est couplé à au moins une partie d'au moins une surface du volume de matière d'une manière parfaitement thermo-conductrice et le dissipateur thermique (4) est refroidi au moyen d'un liquide de refroidissement (5);
le dissipateur thermique (4) est couplé au volume de matière d'une manière parfaitement thermo-conductrice au niveau d'un point du volume de matière, lequel est respectivement situé à proximité du foyer (6) du rayonnement focalisé (2) sur la matière (1) ou à proximité du capillaire de fusion (3) dans la matière (1); et
pour fondre le volume de matière de la matière (1) qui entoure et avoisine le capillaire de fusion (3), de façon respective, le foyer (6) du rayonnement focalisé (2) est déplacé au-dessus de la matière (1) ou le capillaire de fusion (3) est déplacé au travers de la matière (1), dans lequel le foyer (6) du rayonnement focalisé haute énergie (2) et la matière irradiée (1) sont déplacés l'un par rapport à l'autre de telle sorte que la zone souhaitée soit balayée en surface par le foyer (6).

2. Procédé selon la revendication 1, **caractérisé en ce qu'**un faisceau d'électrons, un faisceau laser, un faisceau d'ions ou un faisceau plasma est utilisé en tant que rayonnement focalisé haute énergie (2).

3. Procédé selon l'une quelconque des revendications qui précèdent, **caractérisé en ce qu'**une matière en forme de plaque, de bande, de barre, de barre ronde, de câble ou fil, de boulon ou de tube (1) est traitée, c'est-à-dire qu'elle est soumise à une refusion et/ou à un alliage de refusion, en tant que produit semi-fini initial.

4. Procédé selon l'une quelconque des revendications qui précèdent, **caractérisé en ce qu'**une matière (1) constituée par du Nitinol est traitée, c'est-à-dire qu'elle est soumise à une refusion et/ou à un alliage de refusion.

5. Procédé selon l'une quelconque des revendications qui précèdent, **caractérisé en ce qu'**un dissipateur thermique (4) est utilisé, lequel est configuré en tant que dissipateur thermique à refroidissement par gaz ou en tant que dissipateur thermique à refroidissement par liquide seulement.

6. Procédé selon l'une quelconque des revendications 1 à 4, **caractérisé en ce qu'**un dissipateur thermique (4) est utilisé, lequel est constitué par un matériau parfaitement thermo-conducteur massif, en particulier du cuivre ou de l'argent.

7. Procédé selon la revendication 6, **caractérisé en ce qu'**un dissipateur thermique (4) est utilisé, lequel est configuré en tant que dispositif de maintien ou de serrage externe séparé (7), lequel est en contact avec la surface de la matière traitée (1) depuis l'extérieur.

8. Procédé selon la revendication 6 ou 7, **caractérisé en ce qu'**un dissipateur thermique (4) est utilisé, lequel est formé de manière à ce qu'il épouse la forme de la matière traitée (1).

9. Procédé selon la revendication 8, **caractérisé en ce qu'**une chemise de refroidissement (13) qui est constituée par un tubage ou un noyau de refroidissement qui est constitué par un noyau ou par un tubage est utilisé(e) en tant que dissipateur thermique (4) qui est formé de manière à ce qu'il épouse la forme de la matière traitée (1).

10. Procédé selon l'une quelconque des revendications qui précèdent, **caractérisé en ce qu'**une matière en forme de barre, de barre ronde, de câble ou fil, de boulon ou de tube (1) est traitée en tant que produit semi-fini initial.

11. Procédé selon la revendication 10, **caractérisé en ce qu'**une matière en forme de tube (1) est traitée en tant que produit semi-fini initial, dans lequel un tubage qui est formé en un matériau hautement thermo-conducteur, lequel est traversé par un liquide de refroidissement (5), est utilisé en tant que dissipateur thermique (4) pour la matière en forme de tube (1).

12. Procédé selon la revendication 10, **caractérisé en ce qu'**un dispositif de serrage (7) qui est constitué par un matériau hautement thermo-conducteur et qui est engagé autour du produit semi-fini initial est utilisé en tant que dissipateur thermique (4), dispositif de serrage à l'intérieur duquel le produit semi-fini initial est serré.

13. Procédé selon la revendication 12, **caractérisé en ce que** le produit semi-fini initial est tiré ou poussé hors du dispositif de serrage (7) dans une direction axiale du produit semi-fini initial tandis qu'il est en cours de traitement à l'aide du rayonnement (2).

14. Procédé selon la revendication 12 ou 13, **caractérisé en ce que** le produit semi-fini initial est entraîné en rotation autour de son axe longitudinal tandis qu'il est en cours de traitement à l'aide du rayonnement (2).

15. Procédé selon l'une quelconque des revendications 1 à 9, **caractérisé en ce qu'**une matière en forme de plaque ou de bande (1) est traitée en tant que produit semi-fini initial, dans lequel des plaques de serrage opposées (10) qui sont constituées par un matériau hautement thermo-conducteur d'un dispositif de maintien sont utilisées en tant que dissipateur thermique (4), plaques de serrage (10) entre lesquelles le produit semi-fini initial est serré ou au travers desquelles il est guidé sous pression, et le produit semi-fini initial est traité au moyen d'un capillaire de fusion (3) qui est formé entre les plaques de serrage (10), lequel capillaire de fusion (3) est déplacé au travers du produit semi-fini initial dans la direction longitudinale du produit semi-fini.

16. Procédé selon la revendication 15, **caractérisé en ce que**, après le traitement d'un premier produit semi-fini initial, un second produit semi-fini de même type qui est constitué par la même matière (1) est serré entre les plaques de serrage à la suite du premier produit semi-fini déjà traité et le produit semi-fini initial du type couches qui est formé de cette façon est traité à l'aide d'un capillaire de fusion (3).

17. Procédé selon la revendication 15, **caractérisé en ce qu'**un produit semi-fini initial est serré entre les plaques de serrage (10) et est traité, lequel produit semi-fini initial est constitué par un agencement selon des couches de produits semi-finis initiaux constitués par différentes matières et placés de sorte qu'ils soient adjacents les uns aux autres.

18. Procédé selon l'une quelconque des revendications 1 à 9, **caractérisé en ce qu'**une matière en forme de boulon (1) est traitée en tant que produit semi-fini initial, dans lequel une chemise de refroidissement (13) qui est constituée par un matériau hautement thermo-conducteur et qui renferme le boulon (12) sur sa surface de corps est utilisée en tant que dissipateur thermique (4) et le foyer (6) du rayonnement (2) est déplacé au-dessus du côté de face du produit semi-fini initial.

19. Appareil pour produire des produits semi-finis métalliques au moyen de la refusion et/ou de l'alliage de refusion de matières métalliques (1), dans lequel la solidification de la matière fondue est réalisée au moyen d'un dispositif de refroidissement à une vitesse de refroidissement élevée;
**caractérisé en ce que**:
il comprend un dispositif de rayonnement pour générer un rayonnement focalisé haute énergie (2), lequel est configuré de manière à ce qu'il fonde localement de façon sélective la matière (1) dans un capillaire de fusion (3) dans le volume de matière; dans lequel:
la dissipation de la chaleur qui provient du capillaire de fusion (3) est réalisée via le volume de matière non refondu froid qui est adjacent au capillaire de fusion (3);
il comprend un dispositif de refroidissement pour refroidir au moins un dissipateur thermique (4), lequel est configuré pour dissiper la chaleur qui est transférée depuis le capillaire de fusion (3) au volume de matière en refroidissant le volume de matière au moyen du dissipateur thermique (4), tandis que dans le même temps, la matière (1) est fondue au moyen du rayonnement focalisé (2) ; dans lequel:
le dissipateur thermique (4) est adapté de manière à ce qu'il soit couplé à au moins une partie d'au moins une surface du volume de matière d'une manière parfaitement thermo-conductrice, et le dissipateur thermique (4) est adapté de manière à ce qu'il soit refroidi au moyen d'un liquide de refroidissement (5);
le dissipateur thermique (4) est adapté de manière à ce qu'il soit couplé d'une manière parfaitement thermo-conductrice au volume de matière au niveau d'un point du volume de matière, lequel est respectivement situé à proximité du foyer (6) du rayonnement focalisé (2) sur la matière (1) ou à proximité du capillaire de fusion (3) dans la matière (1); et
Il est configuré de telle sorte que pour fondre le volume de matière de la matière (1) qui entoure et avoisine le capillaire de fusion (3), de façon respective, le foyer (6) du rayonnement focalisé (2) puisse être déplacé au-dessus de la matière (1) ou le capillaire de fusion (3) puisse être déplacé au travers de la matière (1), dans lequel le foyer (6) du rayonnement focalisé haute énergie (2) et la matière irradiée (1) peuvent être déplacés l'un par rapport à l'autre de telle sorte que la zone souhaitée soit balayée en surface par le foyer (6).
